# EUROPÄISCHE PATENTSCHRIFT

(11) **EP 4 024 565 B1**
(45) Veröffentlichungstag und Bekanntmachung des Hinweises auf die Patenterteilung: **17.12.2025**
(21) Anmeldenummer: 21217252.2
(22) Anmeldetag: 23.12.2021
(51) Int. Cl.: H01M 10/613, H01M 10/627, H01M 10/6568, H01M 50/213, H01M 50/251, H01M 50/502, H01M 10/6553

(54) **BATTERIESYSTEM**
BATTERY SYSTEM
SYSTÈME DE BATTERIE

(30) Priorität: 29.12.2020 DE 102020135026
(43) Veröffentlichungstag der Anmeldung: 06.07.2022
(73) Patentinhaber: fischer Power Solutions GmbH, 77855 Achern (DE)
(72) Erfinder: FISCHER, JULIAN, 77876 Kappelrodeck (DE)
(74) Vertreter: Gesthuysen Patentanwälte

(56) Entgegenhaltungen:
- DE-A1- 102017 102 972
- US-A1- 2007 087 266
- US-A1- 2017 005 371

## Beschreibung

Die Erfindung betrifft ein Batteriesystem mit einem Systemgehäuse, einer Leistungsverschaltung, einer Temperiermediumversorgung und mindestens einem Batterieverbund.

Das Batteriesystem ist sowohl für eine Versorgung von Verbrauchern mit elektrischer Energie als auch zur Speicherung von elektrischer Energie vorgesehen, die von Generatoren erzeugt wird. Das Batteriesystem ist insbesondere auch als Pufferbatteriesystem vorgesehen, also als ein Batteriesystem, das bei Ausfall eines Generators eine Versorgung von Verbrauchern übernimmt und/oder die von Generatoren erzeugte elektrische Energie zwischenspeichert, bevor sie von Verbrauchern verbraucht wird. Auch ist es zur Kompensation von Lastspitzen durch Verbraucher und/oder Erzeugungsspitzen durch Generatoren vorgesehen. Es ist geeignet, Notstromaggregate, die einen Verbrennungsmotor aufweisen, zu ersetzen. Demnach ist das Batteriesystem hochleistungsfähig. Verbraucher finden sich zum Beispiel in industriellen Anlagen in Form von Pumpen, Servern oder ganzen Rechenzentren. Generatoren sind zum Beispiel Brennstoffzellen, Fotovoltaikanlagen und Windkraftanlagen.

Der mindestens eine Batterieverbund weist mindestens zwei Batterien und mindestens einen elektrischen Verbundleiter auf und ist im Systemgehäuse angeordnet. Jede der Batterien weist ein Batteriegehäuse, einen ersten elektrischen Batteriepol, einen zweiten elektrischen Batteriepol, einen Batteriezulauf und einen Batterieablauf für ein Temperiermedium und mindestens eine Zelle auf.

Jede der Zellen weist einen ersten elektrischen Zellkontakt und einen zweiten elektrischen Zellkontakt auf. Bei der mindestens einen Zelle einer jeden der Batterien sind zum einen der erste Zellkontakt und der erste Batteriepol und zum anderen der zweite Zellkontakt und der zweite Batteriepol elektrisch miteinander verbunden. Eine elektrische Verbindung mit der Batterie erfolgt über den ersten und den zweiten Batteriepol. Wenn es heißt, eine erste Komponente, wie zum Beispiel der erste Zellkontakt, und eine zweite Komponente, wie zum Beispiel der erste Batteriepol, sind elektrisch miteinander verbunden, dann ist damit gemeint, dass diese elektrisch leitend miteinander verbunden sind.

Weiter weist jede der Zellen einen elektrischen Energiespeicher und ein Zellgehäuse auf. Der elektrische Energiespeicher ist im Zellgehäuse angeordnet und das Zellgehäuse umschließt den elektrischen Energiespeicher dicht für ein Temperiermedium. Demnach dringt ein Temperiermedium nicht in die Zelle ein. Der elektrische Energiespeicher weist einen negativen und einen positiven Pol auf. Zum Beispiel sind zum einen der negative Pol und der erste Zellkontakt und zum anderen der positive Pol und der zweite Zellkontakt elektrisch miteinander verbunden. Dann wird der erste Zellkontakt auch als Minuspol und der zweite Zellkontakt auch als Pluspol bezeichnet. Aus dem Stand der Technik bekannte Zellen sind zum Beispiel Lithium-Ionen-Zellen.

Jedes der Batteriegehäuse weist einen Batterieboden, einen Batterieträger und einen Batteriedeckel auf. Der Batterieboden, der Batterieträger und der Batteriedeckel eines jeden der Batteriegehäuse umschließen einen Batterieinnenraum, der abgesehen vom Batteriezulauf und Batterieablauf dicht für ein Temperiermedium ist. Die Dichtigkeit des Batterieinnenraums abgesehen vom Batteriezulauf und Batterieablauf für ein Temperiermedium bedeutet, dass das Temperiermedium nur über den Batteriezulauf und den Batterieablauf dem Batterieinnenraum zugeführt oder diesem entnommen werden kann.

Die mindestens eine Zelle einer jeden der Batterien ist im Batterieinnenraum der Batterie zur Umspülung mit einem Temperiermedium angeordnet. Die Anordnung der Zelle erfolgt dabei insbesondere durch den Batterieträger. Eine Temperatur einer Zelle muss in einem Temperaturbereich liegen, damit die Zelle zum einen ihre maximale Leistungsfähigkeit und zum anderen ihre maximale Lebensdauer erreicht. Damit die Zelle im Batteriegehäuse im Betrieb der Batterie eine Temperatur in diesem Temperaturbereich hat, wird sie von einem Temperiermedium umspült. Dabei werden eine Temperatur und eine Durchflussrate des Temperiermediums durch den Batterieinnenraum so gewählt, dass die Temperatur der Zelle in dem Temperaturbereich liegt. Ein Temperiermedium strömt durch den Batteriezulauf in den Batterieinnenraum hinein und strömt durch den Batterieablauf aus dem Batterieinnenraum hinaus.

Die mindestens zwei Batterien sind durch den mindestens einen Verbundleiter elektrisch miteinander verbunden. Die Leistungsverschaltung weist einen ersten Leistungsanschluss, eine mit dem ersten Leistungsanschluss elektrisch verbundene erste Leistungsleitung, einen zweiten Leistungsanschluss, eine mit dem zweiten Leistungsanschluss elektrisch verbundene zweite Leistungsleitung und einen Leistungspfad auf. Die erste Leistungsleitung und die zweite Leistungsleitung sind mit dem mindestens einen Batterieverbund elektrisch verbunden. Der Leistungspfad erstreckt sich zwischen dem ersten Leistungsanschluss und dem zweiten Leistungsanschluss. Die erste Leistungsleitung, der mindestens eine Batterieverbund und die zweite Leistungsleitung liegen im Leistungspfad. Der erste Leistungsanschluss und der zweite Leistungsanschluss sind von außen zugänglich am Systemgehäuse angeordnet.

Wenn der Batterieverbund vollständig elektrisch angeschlossen ist, dann sind die Batteriepole mit elektrischen Leitern verbunden. Bei den Leitern handelt es sich zum einen um den mindestens einen Verbundleiter und zum anderen um die erste und zweite Leistungsleitung, welche den Batterieverbund mit dem Batteriesystem elektrisch verbinden. Der mindestens eine Verbundleiter liegt auch im Leistungspfad. Im Betrieb des Batterieverbunds erzeugen die Energiespeicher in den Zellen einen elektrischen Strom oder nehmen einen solchen auf, sodass ein elektrischer Strom über die Leiter und die Batteriepole durch die Batterien fließt. Dabei erzeugen die Energiespeicher Wärme. Da jeder der Batteriepole und Leiter einen elektrischen Widerstand aufweist, erzeugt der Strom auch Wärme in den Batteriepolen und Leitern. Da jede der Verbindungen zwischen den Batteriepolen und den Leitern einen elektrischen Widerstand aufweist, der zumeist höher ist als die Widerstände der Batteriepole und Leiter, erzeugt der Strom in den Verbindungen auch zumeist mehr Wärme als in den Batteriepolen und Leitern. Die durch den Strom erzeugte Wärme erwärmt die Energiespeicher, die Batteriepole, Leiter und Verbindungen und führt zu einer Erhöhung der elektrischen Widerstände. Die Erwärmung kann insbesondere an den Verbindungen auch zu Beschädigungen führen.

Die Temperiermediumversorgung weist einen Systemzulaufanschluss, eine mit dem Systemzulaufanschluss verbundene Systemzulaufleitung, einen Systemablaufanschluss und eine mit dem Systemablaufanschluss verbundene Systemablaufleitung auf. Der Systemzulaufanschluss und der Systemablaufanschluss sind von außen zugänglich am Systemgehäuse angeordnet. Die Systemzulaufleitung und die Systemablaufleitung sind mit dem mindestens einen Batterieverbund zur Durchströmung des Batterieverbunds mit einem Temperiermedium verbunden.

Zum Betrieb des Batteriesystems sind der erste und zweite Leistungsanschluss mit zumindest einem Verbraucher und/oder Generator verbunden und sind der Systemzulaufanschluss und der Systemablaufanschluss mit einer Temperiermediumversorgungseinrichtung verbunden. Im Betrieb des Batteriesystems wird den Zellen des Batteriesystems über den ersten und zweiten Leistungsanschluss elektrische Energie zu- oder abgeführt. Der dazugehörige Strom fließt dabei entlang des Leistungspfads. Weiter wird dem Batteriesystem über den Systemzulaufanschluss ein temperiertes Medium zugeführt und über den Systemablaufanschluss abgeführt, sodass die Temperaturen der Zellen im Temperaturbereich liegen.

Aus der US 2007/0087266 A1 sind verschiedene modulare Batteriesysteme bekannt. Ein solches weist z. B. eine Mehrzahl an Batteriemodulen, mindestens ein Bandelement und ein Schienenpaar auf. Jedes der Batteriemodule weist eine erste und eine zweite Endplatte auf. Das mindestens eine Bandelement verbindet die ersten und zweiten Endplatten miteinander. Die Endplatten sind zwischen den Schienen des Schienenpaars befestigt.

Aufgabe der vorliegenden Erfindung ist daher, ein Batteriesystem anzugeben, bei welchem eine Erwärmung der Batteriepole und der Verbindungen im Vergleich zum Stand der Technik reduziert ist.

Die Aufgabe wird durch ein Batteriesystem mit den Merkmalen von Anspruch 1 gelöst. Bei diesem Batteriesystem sind bei jeder der Batterien der erste Batteriepol durch den Batteriezulauf und der zweite Batteriepol durch den Batterieablauf aus dem Batterieinnenraum nach außen geführt und sind sowohl der Batteriezulauf als auch der Batterieablauf im Batteriedeckel angeordnet. Folglich sind alle Anschlüsse einer jeden der Batterien, also der Batteriezulauf, der Batterieablauf, der erste Batteriepol und der zweite Batteriepol, im Batteriedeckel angeordnet. Dadurch sind die Anschlüsse besser zugänglich, wodurch ein Anschluss der Batterie vereinfacht ist. Hinzu kommt, dass die Batterien des Batterieverbunds für gewöhnlich derart in Bezug auf das Erdschwerefeld angeordnet sind, dass die Batteriedeckel oben sind. Dadurch ist auf einfache Weise eine automatisierte Bestückung des Batterieverbunds mit den mindestens zwei Batterien möglich, wobei nach der Bestückung der Verbundkopf aufgesetzt wird. Gleiches gilt für eine automatisierte Bestückung der mindestens zwei Batterien mit der jeweils mindestens einen Zelle. Durch die Anordnung der Batteriezuläufe und der Batterieabläufe in den Batteriedeckeln ist dann auch sichergestellt, dass ein Temperiermedium in den Batterieinnenräumen verbleibt, wenn eine Undichtigkeit außerhalb der Batterieinnenräume auftritt. Eine Undichtigkeit kann zum Beispiel an oder vor einem Batteriezulauf oder Batterieablauf oder an oder vor der Systemzulaufleitung oder Systemablaufleitung auftreten. Auch wenn eine der Batterien ausläuft und dadurch ein Temperiermedium aus ihrem Batterieinnenraum ausläuft, ist gewährleistet, dass ein Temperiermedium im Batterieinnenraum der mindestens einen anderen Batterie nicht ausläuft.

Weiter weist der Batterieverbund einen Verbundkopf auf und ist der Verbundkopf auf den Batteriedeckeln angeordnet. Der Verbundkopf weist einen Verbundzulaufkanal mit einem Verbundzulaufanschluss und einen Verbundablaufkanal mit einem Verbundablaufanschluss auf.

Einerseits sind jeder der Batteriezuläufe und der Verbundzulaufkanal und andererseits jeder der Batterieabläufe und der Verbundablaufkanal unmittelbar und dicht für ein Temperiermedium miteinander verbunden. Der Batterieverbund ist abgesehen vom Verbundzulaufanschluss und vom Verbundablaufanschluss dicht für ein Temperiermedium. Weiter sind einerseits die Systemzulaufleitung und der mindestens eine Verbundzulaufkanal über den Verbundzulaufanschluss und andererseits die Systemablaufleitung und der mindestens eine Verbundablaufkanal über den Verbundablaufanschluss miteinander verbunden.

Im Betrieb des Batteriesystems strömt ein Temperiermedium über den Systemzulaufanschluss in die Systemzulaufleitung hinein und von dort weiter über den Verbundzulaufanschluss in den Verbundzulaufkanal hinein und strömt über den Verbundablaufanschluss aus dem Verbundablaufkanal hinaus in die Systemablaufleitung und schließlich über den Systemablaufanschluss aus dieser hinaus. Durch die Verbindungen einerseits der Batteriezuläufe mit dem Verbundzulaufkanal und andererseits der Batterieabläufe mit dem Verbundablaufkanal sind die einzelnen Batterien hydraulisch parallel zueinander geschaltet und strömt das Temperiermedium durch jede der Batterien.

Durch die hydraulische Parallelschaltung liegen Temperaturen der Batterien näher beieinander, als wenn die Batterien hydraulisch in Reihe geschaltet sind, wodurch eine Temperaturverteilung des Batterieverbunds homogener ist.

Durch das Strömen des Temperiermediums sind die Batteriepole durch das Temperiermedium umspült, welches die Batteriepole kühlt, also in den Batteriepolen entstehende Wärme abtransportiert. Durch den Abtransport von Wärme wird eine Erwärmung der Batteriepole zumindest reduziert und dadurch auch eine Erhöhung der Widerstände der Batteriepole. Da die Batteriepole und die Leiter durch die Verbindungen auch thermisch miteinander gekoppelt sind, werden auch die Leiter und die Verbindungen gekühlt. Somit wird auch eine Temperaturverteilung der Batterien homogener, wodurch ihre Lebensdauer steigt.

Durch die homogenere Temperaturverteilung sowohl der Batterien als auch des Batterieverbunds ist der Batterieverbund sowohl für höhere Impuls- als auch Dauerleistungen geeignet. Somit eignet sich der Batterieverbund auch für Anwendungen, die Hoch- und Höchstleistung in Bezug auf eine elektrische Kapazität des Batterieverbunds erfordern.

Da die ersten und zweiten Zellkontakte der Zellen im Betrieb des Batterieverbunds in Kontakt mit einem Temperiermedium sind, ist ein geeignetes Temperiermedium ist elektrisch isolierend, sodass die Zellen nicht über das Temperiermedium entladen werden. Es kann flüssig oder gasförmig sein oder eine Mischung aus mindestens einem flüssigen und einem gasförmigen Bestandteil aufweisen. Wenn es heißt, eine Komponente, wie zum Beispiel der erste Batteriepol, ist von einem Temperiermedium umspült, dann ist damit gemeint, dass die Komponente in unmittelbaren Kontakt mit dem Temperiermedium ist.

Aufgrund elektrochemischer Eigenschaften und Aufbauweise von Zellen entsteht im Betrieb einer Zelle am Pluspol der Zelle mehr Wärme als am Minuspol. Deshalb ist es vorteilhaft, dass der erste Batteriepol der Batterie der Minuspol und der zweite Batteriepol der Pluspol ist. Denn dann entsteht am zweiten Batteriepol mehr Wärme als am ersten Batteriepol und die am zweiten Batteriepol entstehende Wärme wird sogleich durch ein Temperiermedium von der Batterie abgeführt und nicht erst durch den Batterieinnenraum geführt, in welchem die Wärme zu einer höheren Erwärmung führt als die vom ersten Batteriepol abgeführte Wärme.

Im Folgenden werden zunächst Ausgestaltungen und Weiterbildungen der Batterien, dann des Batterieverbunds und danach des Batteriesystems beschrieben.

Die Beschreibung der Ausgestaltungen und Weiterbildungen der Batterien erfolgt anhand einer Batterie, die eine Mehrzahl an Zellen aufweist. Bei jeder der Zellen ist der erste elektrische Zellkontakt auf einer ersten Fläche der Zelle und der zweite elektrische Zellkontakt auf einer der ersten Fläche gegenüberliegenden zweiten Fläche der Zelle angeordnet.

Die Batterie weist einen ersten elektrischen Zellverbinder und einen zweiten elektrischen Zellverbinder auf. Einerseits sind jeder der ersten Zellkontakte und der erste Zellverbinder und andererseits jeder der zweiten Zellkontakte und der zweite Zellverbinder elektrisch miteinander verbunden. Dadurch sind die Zellen der Batterie elektrisch parallel geschaltet.

Weiter sind einerseits der erste Zellverbinder und der erste Batteriepol und andererseits der zweite Zellverbinder und der zweite Batteriepol elektrisch miteinander verbunden. Die Zellkontakte und die Batteriepole sind somit mittelbar über die Zellverbinder elektrisch miteinander verbunden.

In einer Ausgestaltung der Batterie weisen der Batteriezulauf eine freie Batteriezulaufquerschnittsfläche und der Batterieablauf eine freie Batterieablaufquerschnittsfläche auf und ist die Batteriezulaufquerschnittsfläche kleiner als die Batterieablaufquerschnittsfläche. Die freien Querschnittsflächen sind die Querschnittsflächen, durch welche ein Temperiermedium strömbar ist. Dadurch, dass der Batteriezulauf ein kleinere freie Querschnittsfläche als der Batterieablauf hat, ist gewährleistet, dass sich im Batterieinnenraum kein übermäßiger Druck durch ein durch den Batterieinnenraum strömendes Temperiermedium aufbaut.

In einer weiteren Ausgestaltung sind die Zellen Rundzellen. Bei einer Rundzelle hat das Zellgehäuse die Form eines Zylinders mit einer runden Querschnittskontur. Der Zylinder weist eine erste und eine zweite runde Endfläche auf, die einander gegenüberliegen. Auf der ersten Endfläche ist der erste Zellkontakt und auf der zweiten Endfläche ist der zweite Zellkontakt angeordnet. Eine Verwendung von Rundzellen ist vorteilhaft, da auch bei einer unmittelbar aneinandergrenzenden Anordnung der Zellen zueinander durch die runde Querschnittskontur der Zellgehäuse Freiräume zwischen den Zellen verbleiben, durch welche ein Temperiermedium strömbar ist.

In einer weiteren Ausgestaltung weist der Batterieboden Bodenaufnahmen für die Zellen auf und sind die Zellen in die Bodenaufnahmen eingesetzt. Vorzugsweise sind die Bodenaufnahmen Zapfen. Die Bodenaufnahmen erleichtern einen Zusammenbau der Batterie. Beim Zusammenbau der Batterie werden die Zellen zunächst in den Batterieträger eingesetzt. Dann wird der Batterieboden auf den Batterieträger gesetzt, wodurch die Zellen in die Bodenaufnahmen eingesetzt werden. Die Zellen sind dann durch die Bodenaufnahmen angeordnet und lateral fixiert.

In einer weiteren Ausgestaltung ist der erste Zellverbinder zwischen dem Batterieboden und den Zellen angeordnet. Demnach ist der erste Zellverbinder zwischen dem Batterieboden und den ersten Zellkontakten angeordnet. Die Abfolge Batterieboden, dann erster Zellverbinder und dann Zellen vereinfacht den Aufbau der Batterie. Beim Zusammenbau der Batterie werden zunächst die Zellen in den Batterieträger eingesetzt. Dann werden die elektrischen Verbindungen zwischen dem ersten Zellverbinder und den ersten Zellkontakten hergestellt. Dann wird der Batterieboden auf den Batterieträger gesetzt. Neben den Zellen ist auch der erste Zellverbinder im Batterieinnenraum angeordnet. Folglich ist auch der erste Zellverbinder im Betrieb der Batterie von einem Temperiermedium umspült und dadurch gekühlt. Da auch jede der Verbindungen der ersten Zellkontakte und des ersten Zellverbinders und die Verbindung des ersten Zellverbinders und des ersten Batteriepols einen elektrischen Widerstand aufweist, erzeugt ein im Betrieb der Batterie fließender Strom Wärme in den Verbindungen. Dabei werden die Verbindungen vom Temperiermedium gekühlt.

Wenn der Batterieboden Bodenaufnahmen aufweist, in welchen die Zellen eingesetzt sind, und der erste Zellverbinder zwischen dem Batterieboden und den Zellen angeordnet ist, dann ist es vorteilhaft, wenn der erste Zellverbinder zu den Bodenaufnahmen passende Bodenausnehmungen aufweist. Denn durch die Bodenausnehmungen ist der erste Zellverbinder im Batterieboden angeordnet und lateral fixiert. Wenn die Bodenaufnahmen im Batterieboden Zapfen sind, dann sind die Bodenausnehmungen im ersten Zellverbinder zu den Zapfen passende Öffnungen.

In einer weiteren Ausgestaltung weist der Batterieträger auf einer dem Batterieboden gegenüberliegenden Ebene Trägeraufnahmen für die Zellen auf und sind die Zellen in die Trägeraufnahmen eingesetzt. Die in die Trägeraufnahmen eingesetzten Zellen sind durch die Trägeraufnahmen angeordnet und lateral fixiert. Wenn der Batterieboden Bodenaufnahmen aufweist, in welche die Zellen eingesetzt sind, und der Batterieträger auf einer dem Batterieboden gegenüberliegenden Ebene Trägeraufnahmen aufweist, in welche die Zellen ebenfalls eingesetzt sind, dann sind die Zellen im Batterieinnenraum vollständig fixiert. Somit ist eine weitere Fixierung der Zellen nicht erforderlich, wodurch der Herstellungsaufwand der Batterie reduziert ist. Insbesondere kommt kein Kleber zum Einsatz. Das ist vorteilhaft, da viele für die Fixierung geeignete Kleber nicht mit geeigneten Temperiermedien kompatibel sind. Jedenfalls ist die Kompatibilität sicherzustellen, was einen erheblichen Aufwand darstellt.

In einer Weiterbildung der vorherigen Ausgestaltung weist der erste Batteriepol eine Batteriepolhalterung auf und ist der erste Batteriepol mit der Batteriepolhalterung in eine der Trägeraufnahmen eingesetzt. Weiter ist die Batteriepolhalterung an die Trägeraufnahme angepasst, sodass der erste Batteriepol gegen ein Verdrehen fixiert ist. Vorzugsweise ist der erste Batteriepol stabförmig ausgebildet. In dieser Weiterbildung ist anstelle einer Zelle der erste Batteriepol in eine der Trägeraufnahmen eingesetzt. Vorzugsweise sind alle Trägeraufnahmen gleich ausgebildet, sodass sowohl die Zellen als auch der erste Batteriepol in diese einsetzbar sind. Durch die gleiche Ausbildung aller Trägeraufnahmen vereinfachen sich Konstruktion und Herstellung des Batterieträgers und damit der Batterie. Eine Fixierung des ersten Batteriepols gegen ein Verdrehen ist vorteilhaft, wenn der erste Batteriepol zum Beispiel über eine Polschraubverbindung mit einem weiteren elektrischen Leiter verbunden wird, da beim Festziehen und Lösen der Schraubverbindung auftretende Drehmomente dann vom Batterieträger und nicht vom ersten Zellverbinder aufgenommen werden. Ein Drehmoment zwischen dem ersten Batteriepol und dem ersten Zellverbinder könnte die Verbindung zwischen diesen beschädigen. Eine Schraubverbindung, wie zum Beispiel eine Polschraubverbindung, von zwei Komponenten miteinander hat den Vorteil, dass die Schraubverbindung auf einfache Weise beliebig oft hergestellt und gelöst werden kann, ohne dass die Komponenten dadurch verändert werden.

In einer Weiterbildung der vorstehenden Weiterbildung weist die Batteriepolhalterung mindestens eine Batteriepolausnehmung auf und ist die freie Batteriezulaufquerschnittsfläche durch die Batteriepolhalterung mit der mindestens einen Batteriepolausnehmung und die Trägeraufnahme bestimmt. Demnach strömt im Betrieb der Batterie ein Temperiermedium durch die mindestens eine Batteriepolausnehmung. Dadurch bilden die Batteriepolhalterung mit der mindestens einen Batteriepolausnehmung und die Trägeraufnahme eine Durchflussdrossel für ein strömendes Temperiermedium.

Wenn der Batterieträger auf einer dem Batterieboden gegenüberliegenden Ebene Trägeraufnahmen aufweist, dann ist es vorteilhaft, wenn mindestens eine der Trägeraufnahmen eine polygone Innenquerschnittskontur aufweist. Die polygone Innenquerschnittskontur ist insbesondere in Verbindung mit Rundzellen vorteilhaft. Denn dann sind Kontaktflächen zwischen den Rundzellen und den Trägeraufnahmen klein, wodurch eine Fläche der Rundzellen entsprechend groß ist, welche mit einem Temperiermedium im Kontakt steht. Sie ist auch vorteilhaft, wenn der erste Batteriepol eine Batteriepolhalterung aufweist und die Batteriepolhalterung eine zur Trägeraufnahme passende polygone Außenquerschnittskontur aufweist. Auf diese Weise ist der erste Batteriepol gegen ein Verdrehen fixiert.

In einer weiteren Ausgestaltung ist der zweite Zellverbinder zwischen dem Batteriedeckel und den Zellen angeordnet. Demnach ist der zweite Zellverbinder zwischen dem Batteriedeckel und den zweiten Zellkontakten angeordnet. Die Abfolge Batteriedeckel, dann zweiter Zellverbinder und dann Zellen vereinfacht den Aufbau der Batterie. Beim Zusammenbau der Batterie werden zunächst die Zellen in den Batterieträger eingesetzt. Dann werden die elektrischen Verbindungen zwischen dem zweiten Zellverbinder und den zweiten Zellkontakten hergestellt. Dann wird der Batteriedeckel auf den Batterieträger gesetzt. Der zweite Zellverbinder ist im Batterieinnenraum angeordnet. Folglich ist auch der zweite Zellverbinder im Betrieb der Batterie von einem Temperiermedium umspült und dadurch gekühlt. Da auch jede der Verbindungen der zweiten Zellkontakte und des zweiten Zellverbinders und die Verbindung des zweiten Zellverbinders und des zweiten Batteriepols einen elektrischen Widerstand aufweist, erzeugt ein im Betrieb der Batterie fließender Strom Wärme in den Verbindungen. Dabei werden die Verbindungen vom Temperiermedium gekühlt.

Wenn der Batterieträger auf einer dem Batterieboden gegenüberliegenden Ebene Trägeraufnahmen aufweist, dann ist es vorteilhaft, die vorstehende Ausgestaltung weiterzubilden, indem der zweite Zellverbinder zwischen den Trägeraufnahmen und dem Batteriedeckel angeordnet ist. Durch die Anordnung des zweiten Zellverbinders zwischen den Trägeraufnahmen und dem Batteriedeckel wird der Aufbau der Batterie weiter vereinfacht. Der zweite Zellverbinder ist vor dem Aufsetzen des Batteriedeckels auf den Batterieträger zugänglich. Vorzugsweise weist mindestens eine der Trägeraufnahmen eine Öffnung auf, die dem zweiten Zellverbinder nur einen Zugang zum zweiten Zellkontakt und keinen Zugang zum ersten Zellkontakt einer in die Trägeraufnahme eingesetzten Zelle freigibt. Durch diese Öffnung wird sichergestellt, dass der zweite Zellverbinder keine elektrische Verbindung zu einem der ersten Zellkontakte und dadurch einen Kurzschluss herstellt. Der zweite Zellverbinder weist passend zu der mindestens einen Öffnung einen Vorsprung auf.

In einer weiteren Ausgestaltung weist der zweite Batteriepol einen Batteriepolkragen auf. Weiter weisen der Batteriepolkragen und der Batterieträger eine formschlüssige Kragenverbindung auf, sodass der zweite Batteriepol gegen ein Verdrehen fixiert ist. Vorzugsweise ist der zweite Batteriepol stabförmig ausgebildet. Die formschlüssige Kragenverbindung ist vorteilhaft, da diese durch ein Einsetzen des zweiten Batteriepols in den Batterieträger entsteht, wodurch der Aufbau der Batterie vereinfacht ist. Eine Fixierung des zweiten Batteriepols gegen ein Verdrehen ist vorteilhaft, wenn der zweite Batteriepol zum Beispiel über eine Polschraubverbindung mit einem weiteren elektrischen Leiter verbunden wird, da beim Festziehen und Lösen der Polschraubverbindung auftretende Drehmomente vom Batterieträger und nicht vom zweiten Zellverbinder aufgenommen werden. Ein Drehmoment zwischen dem zweiten Batteriepol und dem zweiten Zellverbinder könnte die Verbindung zwischen diesen beschädigen. Vorzugsweise sind der Batteriepolkragen und der zweite Zellverbinder durch Laserschweißen miteinander verbunden.

In einer weiteren Ausgestaltung ist von den Komponenten Batterieboden, Batterieträger und Batteriedeckel mindestens eine der Komponenten aus Kunststoff. Vorzugsweise ist eine der Komponenten eine Spritzgusskomponente. Die Verwendung von Kunststoff ist vorteilhaft, da dieser kostengünstig und einfach verarbeitbar ist. Das gilt insbesondere für Spritzgusskomponenten. Vorzugsweise ist zumindest eine der genannten Komponenten aus einem elektrisch nicht leitenden Material.

In einer weiteren Ausgestaltung sind der Batterieboden und der Batterieträger aus voneinander verschiedenen Kunststoffen und weisen eine gemeinsame Bodenkontaktfläche auf. Weiter ist vorgesehen, dass der Batterieboden und der Batterieträger in der Bodenkontaktfläche durch Laserdurchstrahlschweißen stoffschlüssig miteinander verbunden sind. Dabei sind die Kunststoffe derart voneinander verschiedenen, dass einer der Kunststoffe für einen Laserstrahl beim Laserdurchstrahlschweißen wesentlich transparenter ist als der andere Kunststoff. Jedoch haben die Kunststoffe kompatible thermische Ausdehnungskoeffizienten, sodass mechanischen Spannungen zwischen den Komponenten aus den verschiedenen Kunststoffen akzeptabel sind. Zum Beispiel werden die verschiedenen Kunststoffe aus ähnlichen Materialgruppen ausgewählt. Beim Laserdurchstrahlschweißen wird der Laserstrahl derart geführt, dass er durch den transparenteren der beiden Kunststoffe auf den weniger transparenten der beiden Kunststoffe in der Bodenkontaktfläche trifft, den weniger transparenten der beiden Kunststoffe erhitzt, wodurch beide Kunststoffe aufgeschmolzen und auf diese Weise miteinander verschweißt werden. Eine Dichtung ist nicht erforderlich. Eine Dichtung stellt eine Schwachstelle dar. Sie kann zum Beispiel nicht ausreichend beständig gegen ein Temperiermedium sein oder durch Alterung ihre Dichtwirkung verlieren. Auch setzt eine Dichtung einen maximal zulässigen Druck im Batterieinnenraum herab.

Vorzugsweise sind der Batterieboden und der Batterieträger in der Bodenkontaktfläche als Nut-und-Feder ausgebildet und weisen entsprechend eine Nut-und-Feder-Verbindung auf. Zum Beispiel ist die Feder im Batterieträger und ist die Nut im Batterieboden ausgebildet. Die Nut-und-Feder-Verbindung hat verschiedene Vorteile. Zum einen ist durch sie die Bodenkontaktfläche vergrößert. Zum anderen sind der Batterieboden und der Batterieträger zusammengesetzt, aber noch nicht verschweißt, lateral zueinander fixiert, wodurch das Verschweißen vereinfacht ist. Weiter ist die Fläche, in welcher der Kunststoff aufgeschmolzen wird, vergrößert, sodass die Verschweißung über eine größere Fläche erfolgt, was Stabilität und Haltbarkeit verbessert. Auch ist durch die Ausbildung als Nut-und-Feder ein höherer Druck im Batterieinnenraum möglich, da Nut und Feder sich verkeilen.

In einer weiteren Ausgestaltung sind der Batteriedeckel und der Batterieträger aus voneinander verschiedenen Kunststoffen und weisen eine gemeinsame Deckelkontaktfläche auf. Weiter ist vorgesehen, dass der Batteriedeckel und der Batterieträger in der Deckelkontaktfläche durch Laserdurchstrahlschweißen stoffschlüssig miteinander verbunden sind. Vorzugsweise sind der Batteriedeckel und der Batterieträger in der Deckelkontaktfläche als Nut-und-Feder ausgebildet und weisen entsprechend eine Nut-und-Feder-Verbindung auf. Im Übrigen gelten die Ausführungen zur vorstehenden Ausgestaltung entsprechend.

Das stoffschlüssige Verbinden von einerseits dem Batterieboden und dem Batterieträger und andererseits dem Batteriedeckel und dem Batterieträger weist verschiedene Vorteile auf. Ein Vorteil ist die mechanische Stabilität, wodurch die Verbindung auch starken Vibrationen und Erschütterungen standhält. Ein weiterer Vorteil ist, dass diese Verbindungen ohne weitere Dichtmittel dicht für ein Temperiermedium sind. Aus dem Stand der Technik sind Temperiermedien bekannt, insbesondere elektrisch isolierende Temperiermedien, gegen die übliche Dichtmittel nicht beständig sind. Ein fortdauernder Kontakt eines solchen Dichtmittels mit einem solchen Temperiermedium würde das Dichtmittel zerstören, das Temperiermedium kontaminieren und die Dichtigkeit des Batteriegehäuses kompromittieren. Ein weiterer Vorteil ist, dass keine weiteren Verbindungsmittel zum Herstellen der Verbindung erforderlich sind. Ein solches weiteres Verbindungsmittel wären zum Beispiel Schraubverbindungen.

In einer weiteren Ausgestaltung ist von den Komponenten erster Zellverbinder und zweiter Zellverbinder mindestens eine der Komponenten aus einem Blech. Vorzugsweise ist eine der Komponenten aus einem gestanzten und umgeformten Blech. Ein Zellverbinder aus Blech ist vorteilhaft, da die Herstellung aus Blech einfach und kostengünstig ist. Das gilt insbesondere für einen Zellverbinder aus einem gestanzten und umgeformten Blech, da Stanzen und Umformen nur eine geringe Anzahl an Herstellungsschritten erfordert und oftmals auch in einem einzigen Herstellungsschritt umsetzbar sind. Bei kleineren Stückzahlen ist es oft vorteilhaft, das Stanzen durch Laserschneiden zu ersetzen.

In einer weiteren Ausgestaltung sind jeder der ersten Zellkontakte und der erste Zellverbinder durch Laserschweißen miteinander verbunden. Alternativ oder zusätzlich sind jeder der zweiten Zellkontakte und der zweite Zellverbinder durch Laserschweißen miteinander verbunden. Die einzelnen Verbindungen sind dabei elektrisch leitend und stellen auch eine mechanisch stabile Verbindung in Bezug auf Vibrationen und Erschütterungen dar. Die Verbindung der Zellkontakte und der Zellverbinder durch Laserschweißen ist vorteilhaft, da das Herstellen einer solchen Verbindung nur eine kurze Zeit dauert, wodurch auch nur eine geringe Erwärmung der Zellen stattfindet. Eine übermäßige Erwärmung einer Zelle führt zu deren Beschädigung. Hinzu kommt, dass diese Verbindungen im Vergleich zu auf andere Weise hergestellten Verbindungen einen geringeren elektrischen Widerstand aufweisen. Dadurch steigen insbesondere mögliche elektrische Impulsleistungen der Batterie. Alternativen zum Laserschweißen sind Ultraschallschweißen, Widerstandsschweißen und Reibschweißen.

In einer weiteren Ausgestaltung sind der erste Zellverbinder und der erste Batteriepol durch Laserschweißen miteinander verbunden. Alternativ oder zusätzlich sind der zweite Zellverbinder und der zweite Batteriepol durch Laserschweißen miteinander verbunden. Die Ausführungen zum Laserschweißen bei der vorstehenden Ausgestaltung gelten für diese Ausgestaltung entsprechend.

Nachdem zuvor Ausgestaltungen und Weiterbildungen der Batterien beschrieben worden sind, folgen jetzt Ausgestaltungen und Weiterbildungen des Batterieverbunds. Der Batterieverbund weist dabei mindestens zwei der zuvor beschriebenen Batterien auf.

In einer Ausgestaltung des Batterieverbunds sind der Verbundkopf und die Batterien miteinander verbunden. Vorzugsweise sind der Verbundkopf und die Batterien durch jeweils mindestens eine Verbundschraubverbindung miteinander verbunden. Das bedeutet, jede der Batterien und der Verbundkopf sind vorzugsweise durch mindestens eine Schraubverbindung miteinander verbunden.

In einer weiteren Ausgestaltung weist der Batterieverbund mindestens eine Durchflussdrossel auf, sodass ein Temperiermedium durch jede der Batterien mit einer ausreichenden Durchflussrate strömt. Die mindestens eine Durchflussdrossel ist dabei dort im Batterieverbund angeordnet, wo im Betrieb des Batterieverbunds ein Temperiermedium strömt. Vorzugsweise ist eine Durchflussrate durch die Durchflussdrossel einstellbar. Das bedeutet, dass Ihre Drosselwirkung auf die Durchflussrate einstellbar ist.

In einer Weiterbildung der vorstehenden Ausgestaltung ist die mindestens eine Durchflussdrossel im Verbundkopf angeordnet. Zum Beispiel ist die Durchflussdrossel im Verbundzulaufkanal oder im Verbundablaufkanal angeordnet. Dabei bietet sich jedoch die Anordnung der Durchflussdrossel im Verbundzulaufkanal an, da bei dieser Anordnung im Betrieb des Batterieverbunds ein Druck eines Temperiermediums in zumindest einem der Batterieinnenräume geringer ist, als wenn die Durchflussdrossel im Verbundablaufkanal angeordnet ist.

In einer Weiterbildung der vorstehenden Ausgestaltung oder der vorstehenden Weiterbildung ist die mindestens eine Durchflussdrossel in einer der Batterien angeordnet. Wenn zum Beispiel im Verbundkopf keine Durchflussdrossel angeordnet ist, dann ist mindestens eine Durchflussdrossel in einer der Batterien angeordnet. Wenn zum Beispiel im Verbundkopf mindestens eine Durchflussdrossel angeordnet ist, dann ist mindestens eine weitere Durchflussdrossel in einer der Batterien angeordnet. Zum Beispiel ist die Durchflussdrossel am Batteriezulauf oder am Batterieablauf angeordnet. Dabei bietet sich jedoch die Anordnung der Durchflussdrossel am Batteriezulauf an, da bei dieser Anordnung im Betrieb des Batterieverbunds ein Druck eines Temperiermediums im Batterieinnenraum geringer ist, als wenn die Durchflussdrossel im Batterieablauf angeordnet ist. Vorzugsweise ist neben der mindestens einen im Verbundkopf angeordneten Durchflussdrossel mindestens eine weitere Durchflussdrossel in einer der Batterien angeordnet.

In einer Weiterbildung der vorstehenden Weiterbildung ist die mindestens eine Durchflussdrossel zumindest teilweise durch den Batteriezulauf und den ersten Batteriepol gebildet und ist durch eine Form des ersten elektrischen Batteriepols eine Durchflussrate eines Temperiermediums eingestellt. Diese Weiterbildung ist vorteilhaft, da die Anzahl von Komponenten zur Realisierung der Durchflussdrossel reduziert ist. Hinzu kommt, dass durch die Realisierung der Durchflussdrossel am Batteriezulauf im Betrieb des Batterieverbunds ein Druck eines Temperiermediums im Batterieinnenraum geringer ist, als wenn die Durchflussdrossel im Batterieablauf angeordnet ist.

In einer weiteren Ausgestaltung des Batterieverbunds sind die ersten Batteriepole und die zweiten Batteriepole durch Polöffnungen im Verbundkopf hindurchgeführt. Das Hindurchführen der Batteriepole durch den Verbundkopf ist vorteilhaft, da alle Batteriepole von außen und von einer Seite des Batterieverbunds zugänglich sind. Dadurch ist insbesondere ein Montieren und Demontieren des mindestens einen elektrischen Verbundleiters und weiterer Leiter an den Batteriepolen erleichtert.

In einer Weiterbildung der vorstehenden Ausgestaltung sind einerseits jeder der ersten Batteriepole und der Verbundkopf und andererseits jeder der zweiten Batteriepole und der Verbundkopf jeweils durch eine Dichtung für ein Temperiermedium zueinander abgedichtet. Demnach sind jeder der Batteriepole und der Verbundkopf jeweils durch eine Dichtung dicht für ein Temperiermedium abgedichtet. Vorzugsweise sind die Dichtungen O-Ring-Dichtungen. Eine solche Dichtung bewirkt, dass ein Temperiermedium nicht an der Hindurchführung einer der Batteriepole durch den Verbundkopf nach außen dringen kann.

Wenn die Batteriepole durch den Verbundkopf hindurchgeführt sind, dann ist es vorteilhaft, wenn einerseits jeder der Batteriezuläufe und der Verbundkopf und andererseits jeder der Batterieabläufe und der Verbundkopf jeweils durch eine Dichtung für ein Temperiermedium zueinander abgedichtet sind. Vorzugsweise sind auch hier die Dichtungen O-Ring-Dichtungen. Eine solche Dichtung bewirkt, dass ein Temperiermedium nicht zwischen einem der Batteriezuläufe oder Batterieabläufe und dem Verbundkopf nach außen dringen kann. O-Ring-Dichtungen gibt es aus vielen Materialien, wodurch die Wahrscheinlichkeit hoch ist, dass es ein geeignetes Material gibt. Sie sind einfach herzustellen, kostengünstig und einfach austauschbar.

In einer Weiterbildung der vorstehenden Ausgestaltung weist jeder der ersten Batteriepole und jeder der zweiten Batteriepole jeweils eine Polschraubverbindung auf. Die Polschraubverbindungen fixieren den Verbundkopf und die Batteriedeckel zueinander und bewirken eine Dichtwirkung der Dichtungen. Zum Beispiel weist jede der Polschraubverbindungen ein Gewinde im Batteriepol und eine Mutter passend zum Gewinde im Batteriepol auf. Durch ein Festziehen der Muttern auf den Gewinden wird der Verbundkopf gegen die Batteriedeckel gepresst, wodurch sich die Dichtwirkung der Dichtungen einstellt. Wenn auch die Batteriepole und der Verbundkopf wie beschrieben jeweils durch eine Dichtung abgedichtet sind, wird durch die Polschraubverbindungen vorzugsweise auch die Dichtwirkung dieser Dichtungen hergestellt. Die Dichtwirkung ergibt sich vorzugsweise durch feste und starre Positionierung der Dichtungen.

In einer weiteren Ausgestaltung des Batterieverbunds sind der Verbundzulaufkanal und/oder der Verbundablaufkanal jeweils zumindest teilweise durch Bohrungen bzw. durch eine Bohrung gebildet. Zum Beispiel sind sowohl der Verbundzulaufkanal als auch der Verbundablaufkanal jeweils durch eine Bohrung durch den Verbundkopf gebildet. Vorzugsweise ist jede der Bohrungen eine Durchgangsbohrung durch den ganzen Verbundkopf, welche an einem ihrer beiden Enden verschlossen ist. Wenn die Batteriepole, wie beschrieben, durch den Verbundkopf hindurchgeführt sind, dann ist es vorteilhaft, wenn die Bohrungen die Hindurchführungen der Batteriepole durch den Verbundkopf anschneiden, sodass ein Temperiermedium unmittelbar aus der Bohrung des Verbundzulaufkanals in die Batteriezuläufe strömt und das Temperiermedium aus den Batterieabläufen unmittelbar in die Bohrung des Verbundablaufkanals strömt. Die auf diese Weise hergestellten Verbindungen zwischen einerseits dem Verbundzulaufkanal und den Batteriezuläufen und andererseits dem Verbundablaufkanal und den Batterieabläufen sind vorteilhaft, da sie auf einfache Weise hergestellt sind.

In einer weiteren Ausgestaltung sind mindestens in einem der Batteriedeckel ein erster Teil einer formschlüssigen Steckverbindung und im Verbundkopf ein zweiter Teil der formschlüssigen Verbindung ausgebildet. Dabei sind der erste Teil der formschlüssigen Verbindung und der zweite Teil der formschlüssigen Verbindung ineinander eingesetzt. Der mindestens eine Batteriedeckel und der Verbundkopf sind durch die formschlüssige Verbindung zueinander angeordnet und lateral fixiert.

In einer weiteren Ausgestaltung verbindet der mindestens eine Verbundleiter die ersten Batteriepole und die zweiten Batteriepole miteinander, sodass die Batterien elektrisch entweder parallel oder in Reihe geschaltet sind. Wenn der Batterieverbund zum Beispiel zwei Batterien aufweist, dann sind die Batterien durch einen Verbundleiter elektrisch in Reihe oder durch zwei Verbundleiter elektrisch parallel geschaltet. Vorzugsweise sind einerseits der mindestens eine Verbundleiter und andererseits die ersten Batteriepole und die zweiten Batteriepole durch Polschraubverbindungen miteinander verbunden. Diese Ausgestaltung bietet sich insbesondere in Kombination mit Ausgestaltungen an, in welchen, wie beschrieben, Polschraubverbindungen den Verbundkopf und die Batteriedeckel zueinander fixieren und auf diese Weise Dichtwirkungen von Dichtungen bewirken.

In einer weiteren Ausgestaltung ist auf einer Außenseite mindestens einer der Batteriedeckel eine Überdrucköffnung ausgebildet und ist die Überdrucköffnung durch eine spröde Berstscheibe als Überdruckventil dicht für ein Temperiermedium verschlossen. Weiter weist der Verbundkopf eine Überdruckausnehmung auf und überdeckt die Überdruckausnehmung die Überdrucköffnung zumindest teilweise, sodass ein Überdruck aus der Batterie über die Überdruckausnehmung abführbar ist. Die Überdrucköffnung verbindet den Batterieinnenraum mit einem Außenraum. Wenn ein Druck im Batterieinnenraum einer der Batterien einen Berstdruck überschreitet, dann birst die Berstscheibe, wodurch sie ihre Funktion als Überdruckventil erfüllt, und kann der Druck aus dem Batterieinnenraum über die Überdrucköffnung und die Überdruckausnehmung in den Außenraum entweichen.

In einer weiteren Ausgestaltung weist der Batterieverbund eine elektrische Verbundschaltung mit einer elektrischen Verbundschnittstelle auf. Die Verbundschaltung ist zur Überwachung des Batterieverbunds und zur Kommunikation über die Verbundschnittstelle ausgebildet. Die Ausbildung der Verbundschaltung zur Überwachung des Batterieverbunds ergibt sich insbesondere daraus, dass die Verbundschaltung mindestens einen Sensor aufweist, welcher eine Größe misst, die Aufschluss über einen Zustand des Batterieverbunds gibt. Die Ausbildung der Verbundschaltung zur Kommunikation ergibt sich insbesondere daraus, dass die Verbundschaltung zur Kommunikation über die Verbundschnittstelle mit einem weiteren elektrischen Gerät ausgebildet ist. Vorzugsweise weist die Verbundschnittstelle eine galvanische Trennung für die Kommunikation auf. Wenn die elektrische Verbundschaltung über die Verbundschnittstelle mit einem weiteren elektrischen Gerät verbunden ist, dann gewährleistet die galvanische Trennung der Verbundschnittstelle, dass die Verbundschaltung und das Gerät galvanisch getrennt sind. Vorzugsweise ist die Verbundschaltung zur Versorgung aus mindestens einer der Batterien des Batterieverbunds ausgebildet. Demnach wird die Verbundschaltung im Betrieb des Batterieverbunds mit elektrischer Energie aus einer der Batterien versorgt.

In einer Weiterbildung der vorstehenden Ausgestaltung ist die Verbundschaltung auf einer Verbundplatine realisiert und ist die Verbundplatine auf dem Verbundkopf angeordnet. Die Anordnung der Verbundplatine auf dem Verbundkopf bedeutet, dass die Verbundplatine auf dem Verbundkopf fixiert ist. Vorzugsweise weist der Verbundkopf eine Platinenausnehmung auf und ist die Verbundplatine in der Platinenausnehmung versenkt angeordnet. Durch die versenkte Anordnung der Verbundplatine ist diese geschützt und ein Platzbedarf des Batterieverbunds ist reduziert. Die versenkte Anordnung vergrößert auch den Abstand zwischen der Verbundschaltung und den Verbundleitern, sodass ein Spannungsüberschlag zwischen der Verbundschaltung und den Verbundleitern vermieden wird. Vorzugsweise sind die Verbundschaltung und die Verbundplatine mit einem Schutzlack überzogen, der sie gegen kondensierende Feuchtigkeit und Tropfen schützt.

Wenn der Batterieverbund die beschriebene Verbundschaltung und Verbundschnittstelle aufweist, dann ist es vorteilhaft, wenn die Verbundschaltung mindestens einen Temperatursensor aufweist und die Verbundschaltung zur Messung einer Temperatur mit dem Temperatursensor ausgebildet ist. Der Temperatursensor ist zur Messung einer Temperatur des Batterieverbunds ausgebildet und am Batterieverbund angeordnet. Eine Temperatur des Batterieverbunds gibt Aufschluss über einen Zustand des Batterieverbunds, insbesondere über die Batterien und die Zellen. Vorzugsweise ist auf einer Außenseite mindestens einer der Batteriedeckel eine Sensorausnehmung ausgebildet und ist der Temperatursensor in der Sensorausnehmung angeordnet. Durch die Anordnung des Temperatursensors in der Sensorausnehmung ist dieser in diese eingesetzt. Dadurch ist der Temperatursensor zum einen geschützt. Zum anderen ist die Sensorausnehmung im Batteriedeckel derart ausgebildet, dass ein thermischer Widerstand zwischen dem Temperatursensor und einem im Betrieb des Batterieverbunds im Batterieinnenraum befindlichen Temperiermediums möglichst gering ist.

In einer Weiterbildung weist die Verbundschaltung einen weiteren Temperatursensor auf. Weiter ist die Verbundschaltung zur Messung einer Temperatur mit dem weiteren Temperatursensor und vorzugsweise zum Vergleich mit der mit dem Temperatursensor gemessenen Temperatur ausgebildet. Ein Temperiermedium, welches im Betrieb des Batterieverbunds durch diesen strömt, darf im gesamten Batterieverbund eine Differenztemperatur nicht überschreiten. Diese Weiterbildung setzt die Erfassung von Temperaturen an verschiedenen Stellen des Batterieverbunds um, sodass Differenztemperaturen überwachbar sind. Vorzugsweise ist auf der Außenseite eines weiteren der Batteriedeckel eine Sensorausnehmung ausgebildet und ist der weitere Temperatursensor in der Sensorausnehmung angeordnet.

Wenn der Batterieverbund die beschriebene Verbundschaltung und Verbundschnittstelle aufweist, dann ist es auch vorteilhaft, wenn die Verbundschaltung zur Messung einer Spannung mindestens einer der Batterien und/oder zum Bestimmen und/oder zum Einstellen eines Ladezustands von mindestens einer der Batterien ausgebildet ist. Sowohl das Messen der Spannung als auch das Bestimmen des Ladezustands erfolgt jeweils mittels mindestens eines Sensors, welcher eine Größe misst. Sowohl die Spannung als auch der Ladezustand geben Aufschluss über den Zustand des Batterieverbunds. Zum Zustand des Batterieverbunds gehört insbesondere auch der Ladezustand. Die Ausbildung der Verbundschaltung zum Einstellen des Ladezustands von mindestens einer der Batterien bedeutet, dass die Verbundschaltung ausgebildet ist, den Ladezustand von mindestens zwei der Batterien aneinander anzugleichen.

Nachdem zuvor Ausgestaltungen und Weiterbildungen Batterieverbunds beschrieben worden sind, folgen jetzt Ausgestaltungen und Weiterbildungen des Batteriesystems. Das Batteriesystem weist dabei mindestens einen der zuvor beschriebenen Batterieverbünde auf.

In einer Ausgestaltung des Batteriesystems weist das Batteriesystem eine elektrische Systemschaltung zur Überwachung des Batteriesystems und eine elektrische Systemsteuerung zur Steuerung des Batteriesystems auf. Vorzugsweise ist die Systemschaltung zur Versorgung aus mindestens einer der Batterien ausgebildet und vorzugsweise ist die Systemsteuerung zur Versorgung aus einer externen Energiequelle ausgebildet. Demnach wird die Systemschaltung im Betrieb des Batteriesystems mit elektrischer Energie aus einer der Batterien versorgt und die Systemsteuerung aus einer externen Energiequelle. Folglich weist das Batteriesystem einen von außen zugänglichen elektrischen Anschluss zum Anschluss an eine externe Energiequelle auf.

In einer Weiterbildung der vorstehenden Ausgestaltung weist die Systemschaltung eine Systemschnittstelle auf und sind die Systemschaltung und die Systemsteuerung über die Systemschnittstelle zur Kommunikation miteinander ausgebildet. Vorzugsweise weist die Systemschnittstelle eine galvanische Trennung auf. Die galvanische Trennung bewirkt insbesondere, dass die Systemschaltung und die Systemsteuerung unterschiedliche elektrische Potenziale aufweisen können.

In einer anderen Weiterbildung der vorstehenden Ausgestaltung ist die Systemschaltung auf einer Systemschaltungsplatine realisiert und/oder ist die Systemsteuerung auf einer Systemsteuerungsplatine realisiert. Die Realisierung der Systemschaltung und der Systemsteuerung auf separaten Platinen ist insbesondere in Verbindung mit der zuvor beschriebenen galvanischen Trennung vorteilhaft, da Luft ein besserer Isolator als ein Platinenmaterial ist.

In einer anderen Weiterbildung der vorstehenden Ausgestaltung weist die Systemsteuerung einen Systemanschluss auf und ist die Systemsteuerung zur Kommunikation über den Systemanschluss ausgebildet. Vorzugsweise ist der Systemanschluss von außen zugänglich am Systemgehäuse angeordnet. Im Betrieb des Batteriesystems ist die Systemsteuerung über den Systemanschluss mit einem Gerät verbunden. Das Gerät kann mit der Systemsteuerung kommunizieren. Wenn die Systemschaltung die zuvor beschriebene Systemschnittstelle aufweist, dann kann das Gerät auch mit der Systemschaltung kommunizieren. Zum Beispiel kann das Gerät eine Temperatur, eine Spannung, einen Strom oder einen Zustand der Sicherung auslesen.

In einer anderen Weiterbildung der vorstehenden Ausgestaltung weist die Systemschaltung eine im Leistungspfad angeordnete Sicherung auf. Die Sicherung ist ausgebildet, auszulösen, sodass kein Strom mehr durch sie fließt, wenn ein durch sie fließender Strom einen ersten Grenzstrom für eine erste Grenzdauer überschreitet. Die Systemschaltung ist zur Überwachung des Batteriesystems ausgebildet. Dazu gehört auch, Zustände des Batteriesystems zu erkennen, welche eine Gefahr für das Batteriesystem, insbesondere die Zellen, darstellen. Ein solcher Zustand tritt zum Beispiel ein, wenn ein Strom über den Leistungspfad, also auch durch die Zellen, fließt, der den ersten Grenzstrom für die erste Grenzdauer überschreitet. Die Systemschaltung ist eine aktive Überwachungseinrichtung, da sie mit elektrischer Energie versorgt werden muss, um bestimmungsgemäß zu funktionieren. Im Gegensatz dazu ist die Sicherung eine passive Überwachungseinrichtung. Somit gewährleisten die Sicherung und die Systemschaltung Redundanz und erhöhen die Sicherheit des Batteriesystems. Vorzugsweise ist die Sicherung eine Schmelzsicherung und vorzugsweise ist die Systemsteuerung zur Detektion eines Zustands der Sicherung ausgebildet. Die Detektion des Zustands umfasst insbesondere, ob die Sicherung ausgelöst hat oder nicht ausgelöst hat.

In einer anderen Weiterbildung der vorstehenden Ausgestaltung weist die Systemschaltung ein erstes im Leistungspfad und in der ersten Leistungsleitung angeordnetes Schütz zur Unterbrechung des Leistungspfads auf. Vorzugsweise ist die Systemsteuerung zur Steuerung des ersten Schützes ausgebildet.

In einer anderen Weiterbildung der vorstehenden Ausgestaltung weist die Systemschaltung ein zweites im Leistungspfad und in der zweiten Leistungsleitung angeordnetes Schütz zur Unterbrechung des Leistungspfads auf. Vorzugsweise ist die Systemsteuerung zur Steuerung des zweiten Schützes ausgebildet.

In den beiden vorstehenden Weiterbildungen kommen Schütze zum Einsatz. Ein Schütz ist ein Schalter, der zumeist elektromagnetisch gesteuert ist. Hier werden auch Relais als Schütze aufgefasst. Vorzugsweise sind die Schütze in den Weiterbildungen nur dann leitend, wenn sie angesteuert sind. Entsprechend sind sie nichtleitend und unterbrechen jeweils den Leistungspfad, wenn sie nicht angesteuert sind. Wenn sie durch die Systemsteuerung gesteuert sind und die Versorgung der Systemsteuerung mit elektrischer Energie wird unterbrochen, dann werden auch die Schütze nicht mehr angesteuert und sie unterbrechen den Leistungspfad. Dadurch weist das Batteriesystem eine inhärente Sicherheit auf. Wenn zwei Schütze gemäß den vorstehenden Ausführungen im Batteriesystem angeordnet sind und jeweils den Leitungspfad unterbrechen, dann besteht keine galvanische Verbindung zwischen einerseits den Zellen und andererseits dem ersten und zweiten Leistungsanschluss, wodurch die Sicherheit des Batteriesystems vergrößert ist.

In einer anderen Weiterbildung der vorstehenden Ausgestaltung weist die Systemschaltung einen im Leistungspfad angeordneten Shunt zur Messung eines Stroms im Leistungspfad auf. Vorzugsweise ist die Systemsteuerung zur Messung eines Stroms durch den Shunt ausgebildet. Weiter ist die Systemsteuerung vorzugsweise ausgebildet, zu bestimmen, ob der Strom einen zweiten Grenzstrom für eine zweite Grenzdauer überschreitet. Wenn die Systemschaltung das erste und/oder das zweite Schütz aufweist, dann ist die Systemsteuerung vorzugsweise zusätzlich ausgebildet, das erste und/oder zweite Schütz nicht mehr anzusteuern, wenn der Strom den zweiten Grenzstrom für die zweite Grenzdauer überschritten hat. Wenn die Systemschaltung auch die zuvor beschriebene Sicherung aufweist, dann ist es vorteilhaft, wenn der zweite Grenzstrom kleiner als der erste Grenzstrom gewählt ist und/oder die zweite Grenzdauer kürzer als die erste Grenzdauer gewählt ist. Denn auf diese Weise wird der Leistungspfad durch das erste und/oder zweite Schütz unterbrochen bevor die Sicherung auslöst. Das ist vorteilhaft, da eine Sicherung, insbesondere eine Schmelzsicherung, im Gegensatz zu einem Schütz nach dem Auslösen ausgetauscht werden muss.

In einer anderen Weiterbildung der vorstehenden Ausgestaltung ist die Systemsteuerung zur Bestimmung einer Spannung zwischen der ersten Leistungsleitung und der zweiten Leistungsleitung und zur Ansteuerung des ersten Schützes und/oder des zweiten Schützes in Abhängigkeit von der Spannung ausgebildet. Zum Beispiel ist die Systemsteuerung ausgebildet, den Leistungspfad durch entsprechende Ansteuerung des ersten und/oder zweiten Schützes zu unterbrechen, wenn die Spannung eine Grenzüberspannung überschreitet oder eine Grenzunterspannung unterschreitet. Eine Grenzüberspannung tritt zum Beispiel dann auf, wenn das Batteriesystem über den ersten und zweiten Leistungsanschluss an einen Generator angeschlossen ist und dieser eine Spannung erzeugt, die oberhalb der Grenzüberspannung liegt. Eine Grenzunterspannung tritt zum Beispiel dann auf, wenn das Batteriesystem über den ersten und zweiten Leistungsanschluss an einen Verbraucher angeschlossen ist und der Verbraucher die Zellen des Batteriesystems entlädt, wodurch die die Spannung die Grenzunterspannung unterschreitet.

In einer anderen Weiterbildung der vorstehenden Ausgestaltung weist der mindestens eine Batterieverbund eine elektrische Verbundschaltung mit einer elektrischen Verbundschnittstelle auf. Weiter ist die Verbundschaltung zur Überwachung des Batterieverbunds und zur Kommunikation über die Verbundschnittstelle ausgebildet und sind der Batterieverbund und die Systemsteuerung über die Verbundschnittstelle miteinander verbunden und zur Kommunikation miteinander ausgebildet.

Wenn der mindestens eine Batterieverbund mindestens zwei Temperatursensoren aufweist, dann ist vorzugsweise die Systemsteuerung zum Vergleich von mit den mindestens zwei Temperatursensoren gemessenen Temperaturen und zur Überwachung von Differenztemperaturen zwischen den gemessenen Temperaturen ausgebildet.

Wenn der mindestens eine Batterieverbund zur Messung einer Spannung wie zuvor beschrieben ausgebildet ist, dann ist vorzugsweise die Systemsteuerung zum Bestimmen und/oder zum Einstellen eines Ladezustands von mindestens einer der Batterien ausgebildet.

In einer Ausgestaltung des Batteriesystems weist das Batteriesystem mindestens zwei Batterieverbünde und die Leistungsverschaltung mindestens einen Leistungsleiter auf. Weiter sind die mindestens zwei Batterieverbünde durch den mindestens einen Leistungsleiter elektrisch entweder in Reihe oder parallel geschaltet und sind einerseits die Systemzulaufleitung und jeder der Verbundzulaufkanäle über den Verbundzulaufanschluss und andererseits die Systemablaufleitung und jeder der Verbundablaufkanäle über den Verbundablaufanschluss miteinander verbunden. Der mindestens eine Leistungsleiter liegt im Leistungspfad. Wenn das Batteriesystem zum Beispiel zwei Batterieverbünde aufweist, dann sind die Batterieverbünde durch einen Leistungsleiter elektrisch in Reihe oder durch zwei Leistungsleiter elektrisch parallel geschaltet.

Durch die direkte Verbindung einerseits jeder der Verbundzulaufkanäle und der Systemzulaufleitung und andererseits jeder der Verbundablaufkanäle und der Systemablaufleitung sind die einzelnen Batterieverbünde hydraulisch parallel zueinander geschaltet und strömt im Betrieb ein Temperiermedium durch jeden der Batterieverbünde. Durch die hydraulische Parallelschaltung liegen Temperaturen der Batterieverbünde näher beieinander, als wenn die Batterieverbünde hydraulisch in Reihe geschaltet sind, wodurch eine Temperaturverteilung des Batteriesystems homogener ist.

Vorzugsweise weist mindestens einer der Batterieverbünde eine der zuvor beschriebenen Durchflussdrosseln auf, sodass im Betrieb eine Durchflussrate eines Temperiermediums durch jeden der Batterieverbünde zumindest annähernd gleich ist. Das hat zumindest annähernd gleiche Temperaturen der Batterieverbünde zur Folge.

In einer Weiterbildung der zuvor beschriebenen Ausgestaltung sind die mindestens zwei Batterieverbünde über die Verbundschnittstelle von einem der Batterieverbünde miteinander verbunden und zur Kommunikation miteinander ausgebildet. Die Verbindung ist zum Beispiel in der Art einer Daisy Chain realisiert. Auf diese Weise ist eine Kommunikation der Systemsteuerung mit jedem der mindestens zwei Batterieverbünde ermöglicht.

In einer weiteren Ausgestaltung des Batteriesystems weist das Systemgehäuse einen Systembereich und einen Batteriebereich auf. Weiter sind der Systembereich und der Batteriebereich voneinander räumlich separiert. Die Systemschaltung und die Systemsteuerung sind im Systembereich und der mindestens eine Batterieverbund ist im Batteriebereich angeordnet. Wenn zum Beispiel ein Temperiermedium aus dem mindestens einen Batterieverbund austritt, gelangt es aufgrund der räumlichen Separation nicht in den Systembereich, wodurch eine Beschädigung des Systembereichs durch ein Temperiermedium ausgeschlossen ist. Zum Beispiel beschädigen einige übliche Temperiermedien Komponenten elektrischer Schaltungen wie sie zum Beispiel die Verbundschaltung, die Systemschaltung und die Steuerschaltung aufweisen. Zu diesen Komponenten gehören insbesondere auch Platinen. Vorzugsweise ist im Systembereich mindestens ein Ventilator zur Umwälzung der Luft im Systembereich und/oder Batteriebereich angeordnet. Durch die Umwälzung der Luft im Systembereich, wird im Betrieb des Batteriesystems eine Temperaturverteilung von Komponenten im Systembereich gleichmäßiger.

In einer weiteren Ausgestaltung ist zwischen dem mindestens einen Batterieboden und dem Systemgehäuse eine temperaturisolierende und/oder feuerfeste Einlage angeordnet. Vorzugsweise weist die Einlage Glaswolle oder Silikatwolle. In einer Weiterbildung der vorstehenden Ausgestaltung ist das Systemgehäuse mit der Einlage zumindest teilweise ausgekleidet.

Durch die temperaturisolierende und/oder feuerfeste Einlage ist die Sicherheit des Batteriesystems verbessert, wenn zum Beispiel sich eine Temperatur des Batteriesystems aufgrund eines Defekts des Batteriesystems erhöht.

In einer Weiterbildung weist die Einlage Glaswolle auf und ist im Systemgehäuse mindestens eine Gasöffnung ausgebildet, sodass ein aus mindestens einer der Batterien austretendes Gas zunächst durch die Glaswolle und dann durch die Gasöffnung aus dem Systemgehäuse strömt. Das Gas tritt zum Beispiel aus einer der zuvor beschriebenen Überdrucköffnungen einer der Batterien aus. Das Gas wird durch die Glaswolle gefiltert, insbesondere kann das Gas auch Flusssäure enthalten, die ebenfalls durch die Glaswolle gefiltert wird.

Im Einzelnen ist eine Vielzahl von Möglichkeiten gegeben, den Batterieverbund auszugestalten und weiterzubilden. Dazu wird verwiesen sowohl auf die dem unabhängigen Anspruch nachgeordneten Ansprüche als auch auf die nachfolgende Beschreibung eines bevorzugten Ausführungsbeispiels in Verbindung mit der Zeichnung. In der Zeichnung zeigt
- Figur 1: eine perspektivische Ansicht eines Ausführungsbeispiels einer Batterie eines Ausführungsbeispiels eines Batterieverbunds,
- Figur 2: eine perspektivische Explosionsansicht der Batterie,
- Figur 3: eine in einer Längsrichtung geschnittene Ansicht der Batterie,
- Figur 4: eine erste perspektivische Explosionsansicht eines Batteriegehäuses der Batterie,
- Figur 5: eine zweite perspektivische Explosionsansicht des Batteriegehäuses,
- Figur 6: eine perspektivische Ansicht von Batteriepolen der Batterie,
- Figur 7: eine Schnittansicht durch einen Batterieträger der Batterie,
- Figur 8: eine Schnittansicht durch einen Batteriedeckel der Batterie,
- Figur 9: eine perspektivische Ansicht eines Ausführungsbeispiels eines Batterieverbunds,
- Figur 10: eine erste Ansicht einer Explosionsdarstellung des Batterieverbunds,
- Figur 11: eine zweite Ansicht der Explosionsdarstellung,

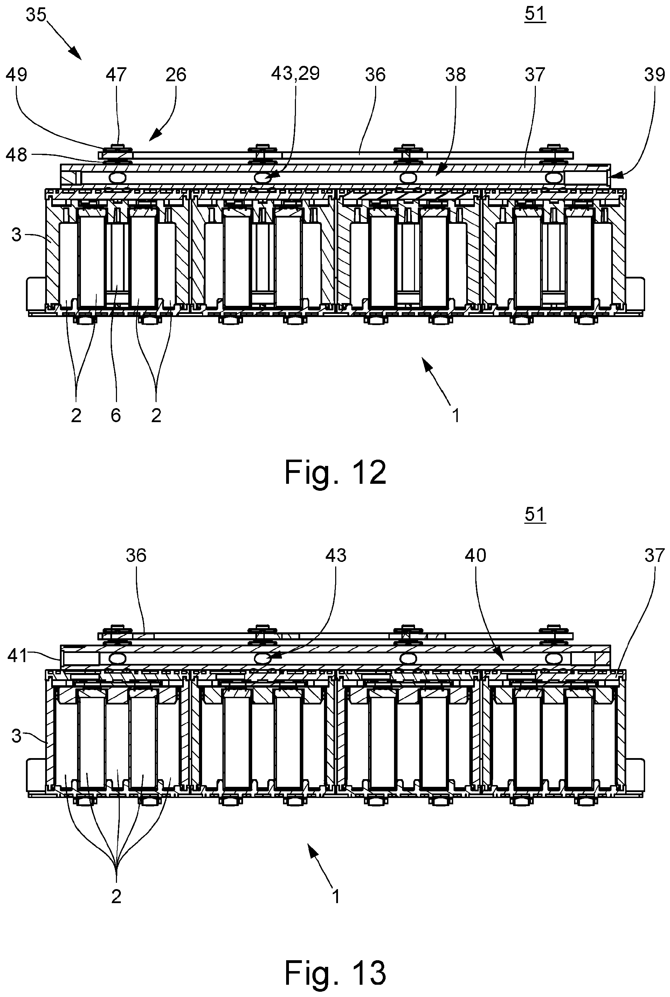

- Figur 12: eine in einer Längsrichtung geschnittene erste Ansicht des Batterieverbunds,
- Figur 13: eine in einer Längsrichtung geschnittene zweite Ansicht des Batterieverbunds,

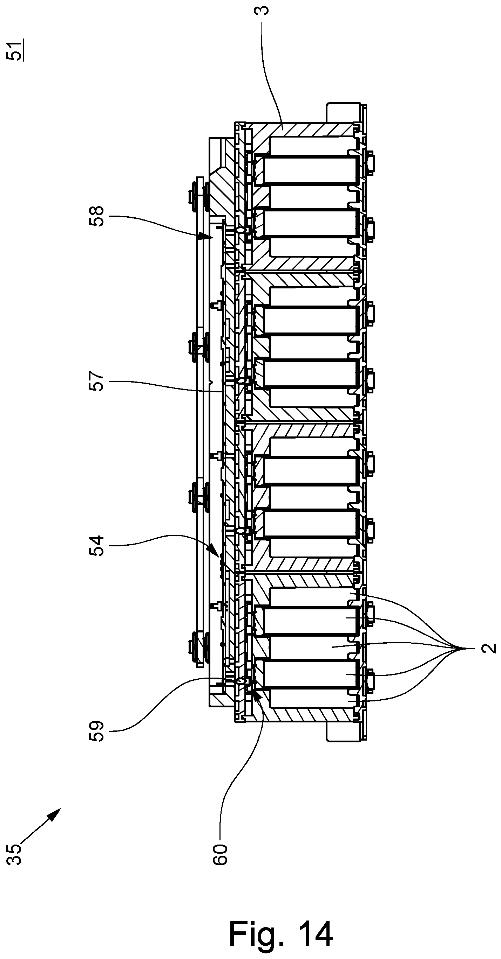

- Figur 14: eine in einer Längsrichtung geschnittene dritte Ansicht des Batterieverbunds,

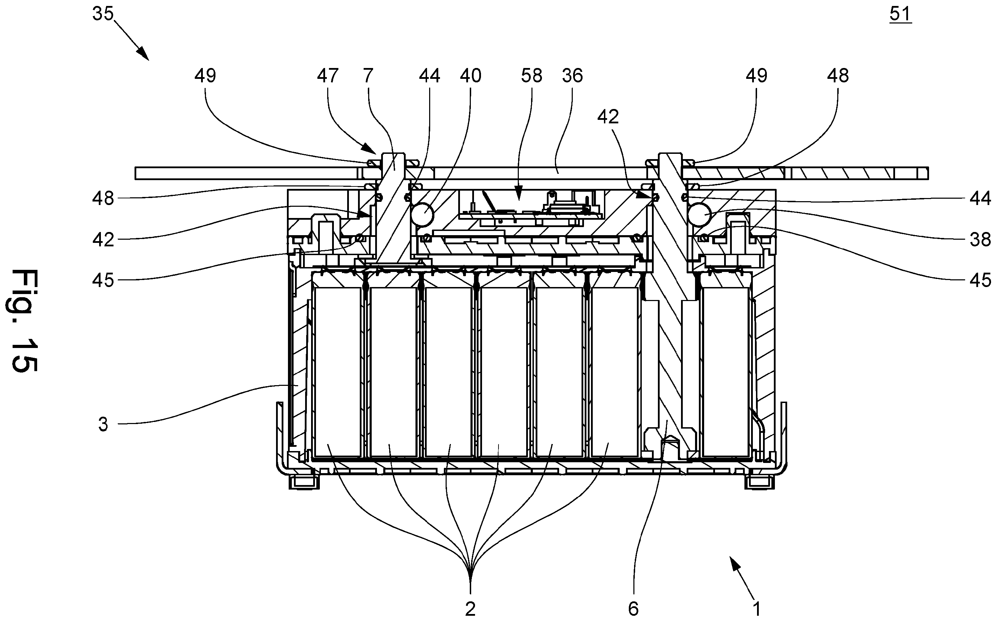

- Figur 15: eine in einen der Querrichtung geschnittene Ansicht des Batterieverbunds,
- Figur 16: eine perspektive Ansicht eines Ausführungsbeispiels eines Batteriesystems ohne Systemgehäuse,
- Figur 17: eine erste perspektivische Ansicht des Batteriesystems mit dem Systemgehäuse,
- Figur 18: eine zweite perspektivische Ansicht des Batteriesystems mit dem Systemgehäuse und
- Figur 19: eine perspektivische Ansicht von Verbundschaltungen, einer Systemschaltung und einer Systemsteuerung des Batteriesystems.

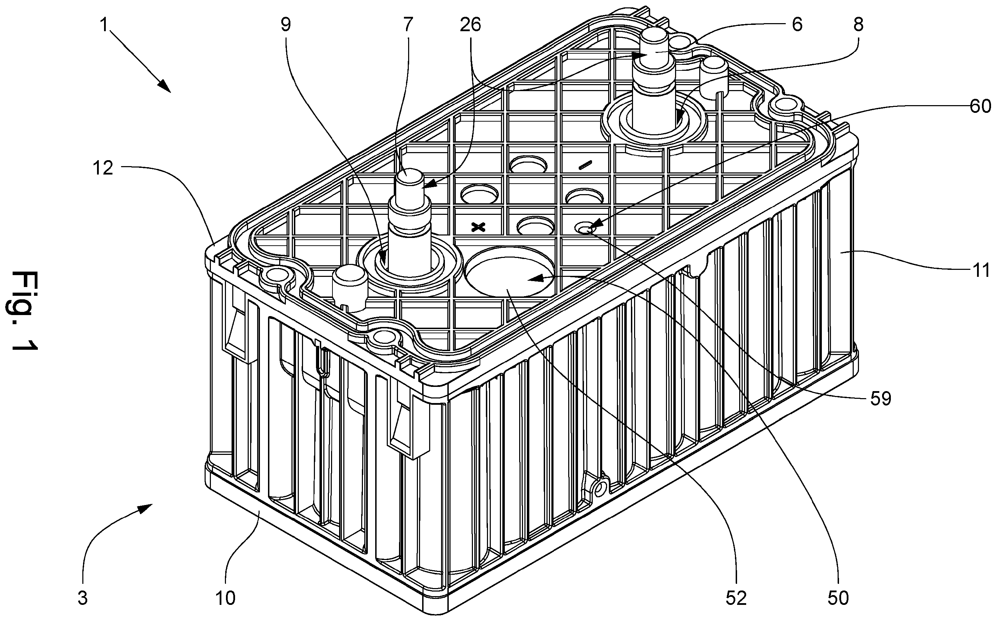

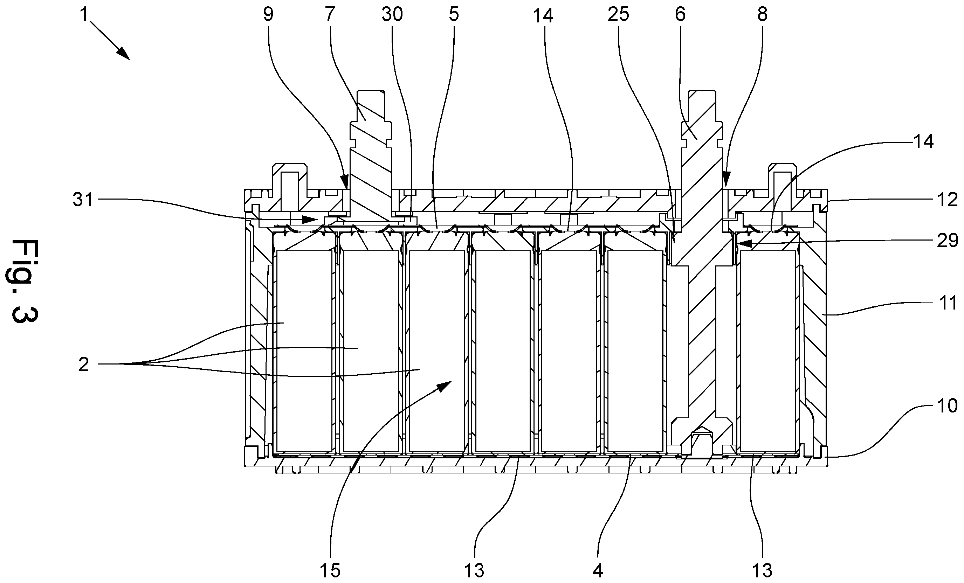

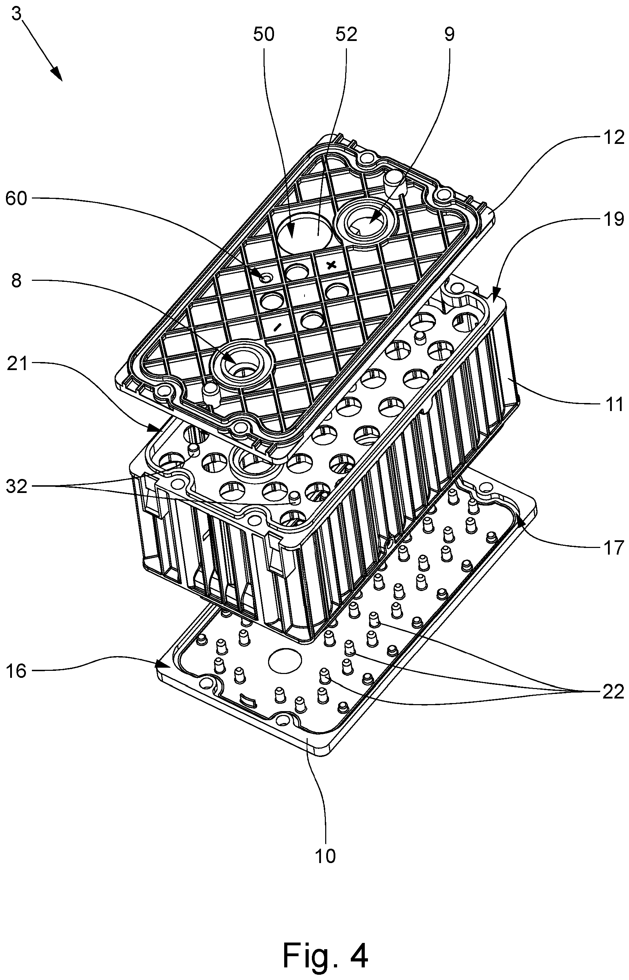

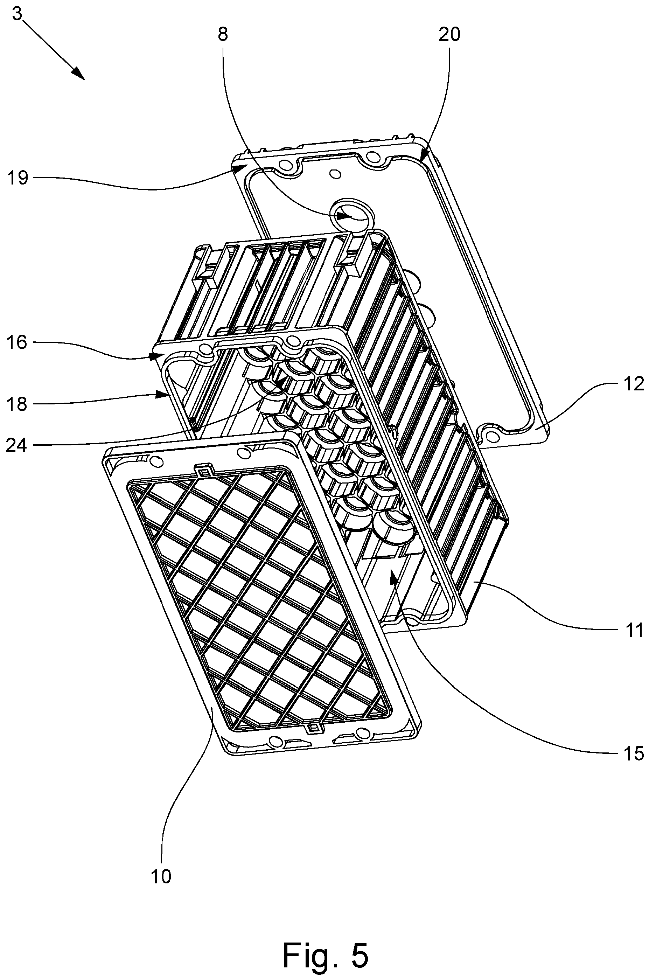

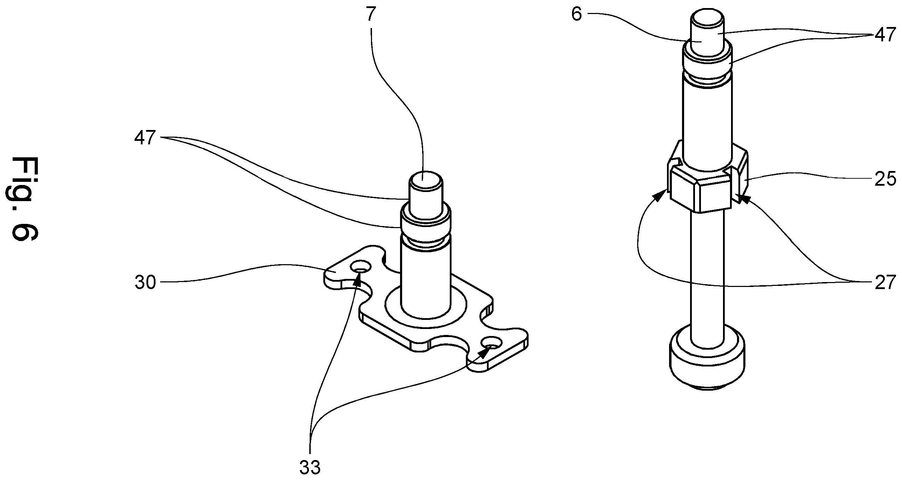

Die Figuren 1 bis 3 zeigen verschiedene Ansichten eines Ausführungsbeispiels einer Batterie 1. Die Batterie 1 dient sowohl der Versorgung von Verbrauchern mit elektrischer Energie als auch zur Speicherung von elektrischer Energie, die von Generatoren erzeugt wird. Die Batterie 1 weist eine Mehrzahl an Zellen 2, ein Batteriegehäuse 3, einen ersten elektrischen Zellverbinder 4, einen zweiten elektrischen Zellverbinder 5, einen ersten elektrischen Batteriepol 6 und einen zweiten elektrischen Batteriepol 7 auf. Weiter weist die Batterie 1 einen Batteriezulauf 8 und einen Batterieablauf 9 für ein Temperiermedium auf. Das Batteriegehäuse 3, welches ohne die zuvor genannten übrigen Komponenten der Batterie 1 in den Figuren 4 und 5 dargestellt ist, weist einen Batterieboden 10, einen Batterieträger 11 und einen Batteriedeckel 12 auf. Der erste Batteriepol 6 und der zweite Batteriepol 7 sind ohne die eingangs genannten übrigen Komponenten in Figur 6 dargestellt.

Der erste Batteriepol 6 ist durch den Batteriezulauf 8 geführt und der zweite Batteriepol 7 ist durch den Batterieablauf 9 geführt. Dadurch sind die Batteriepole 6, 7 im Betrieb der Batterie 1 durch ein Temperiermedium umspült, welches die Batteriepole 6, 7 kühlt. Sowohl der Batteriezulauf 8 als auch der Batterieablauf 9 sind im Batteriedeckel 12 angeordnet. Somit sind auch der erste Batteriepol 6 und der zweite Batteriepol 7 im Batteriedeckel 12 angeordnet.

Die Zellen 2 sind Rundzellen. Jede der Zellen 2 hat einen elektrischen Energiespeicher und ein Zellgehäuse in Zylinderform mit einer runden Querschnittskontur. Der elektrische Energiespeicher ist im Zellgehäuse angeordnet und das Zellgehäuse umschließt den elektrischen Energiespeicher dicht für ein Temperiermedium. Weiter weist jede der Zellen 2 einen ersten elektrischen Zellkontakt 13 auf einer ersten Fläche der Zelle 2 und einen zweiten elektrischen Zellkontakt 14 auf einer der ersten Fläche gegenüberliegenden zweiten Fläche der Zelle 2 auf.

Der Batterieboden 10, der Batterieträger 11 und der Batteriedeckel 12 umschließen einen Batterieinnenraum 15 abgesehen vom Batteriezulauf 8 und Batterieablauf 9 dicht für ein Temperiermedium. Somit kann ein Temperiermedium nur über den Batteriezulauf 8 und den Batterieablauf 9 dem Batterieinnenraum 15 zugeführt oder diesem entnommen werden. Die Zellen 2 sind im Batterieinnenraum 15 zur Umspülung mit einem Temperiermedium angeordnet. Durch die runde Querschnittskontur der Zellen 2 sind trotz der unmittelbar aneinandergrenzenden Anordnung der Zellen 2 Freiräume zwischen den Zellen 2 verblieben, durch welche ein Temperiermedium strömbar ist. Im Betrieb der Batterie 1 strömt ein Temperiermedium durch den Batteriezulauf 8 in den Batterieinnenraum 15 hinein und strömt durch den Batterieablauf 9 aus dem Batterieinnenraum 15 hinaus. Durch den beschriebenen Aufbau der Batterie 1 ist eine homogene und einheitliche Umströmung der Zellen 2 gegeben.

Der Batterieboden 10, der Batterieträger 11 und der Batteriedeckel 12 sind Spritzgusskomponenten aus Kunststoff. Der Batterieboden 10 und der Batterieträger 11 sind aus voneinander verschiedenen Kunststoffen und weisen eine gemeinsame Bodenkontaktfläche 16 auf. Die Bodenkontaktfläche 16 ist als Nut-und-Feder ausgebildet. Und zwar ist eine erste Nut 17 im Batterieboden 10 und ist eine erste Feder 18 im Batterieträger 11 ausgebildet. Der Batterieboden 10 und der Batterieträger 11 sind in der Bodenkontaktfläche 16 durch Laserdurchstrahlschweißen stoffschlüssig miteinander verbunden.

Auch der Batteriedeckel 12 und der Batterieträger 11 sind aus voneinander verschiedenen Kunststoffen und weisen eine gemeinsame Deckelkontaktfläche 19 auf. Die Deckelkontaktfläche 19 ist ebenfalls als Nut-und-Feder ausgebildet. Und zwar ist eine zweite Nut 20 im Batteriedeckel 12 und ist eine zweite Feder 21 im Batterieträger 11 ausgebildet. Der Batteriedeckel 12 und der Batterieträger 11 sind in der Deckelkontaktfläche 19 durch Laserdurchstrahlschweißen stoffschlüssig miteinander verbunden.

Der Batterieboden 10 weist Bodenaufnahmen 22 für die Zellen 2 auf, die Zapfen sind. Der erste Zellverbinder 4 ist zwischen dem Batterieboden 10 und den Zellen 2 angeordnet. Der erste Zellverbinder 4 weist zu den Bodenaufnahmen 22 passende Bodenausnehmungen 23 auf, die Öffnungen sind. Die Zellen 2 und der erste Zellverbinder 4 sind in die Bodenaufnahmen 22 eingesetzt, wodurch sie angeordnet und lateral fixiert sind. Die Abfolge Batterieboden 10, dann erster Zellverbinder 4 und dann Zellen 2 vereinfacht den Aufbau der Batterie 1.

Der Batterieträger 11 weist auf einer dem Batterieboden 10 gegenüberliegenden Ebene Trägeraufnahmen 24 für die Zellen 2 auf. Die Trägeraufnahmen 24 weisen eine polygone Innenquerschnittskontur in Form einer sechseckigen Querschnittskontur auf und sind alle gleich ausgebildet. Die Trägeraufnahmen 24 sind demnach wabenförmig. Durch die gleiche Ausbildung aller Trägeraufnahmen 24 vereinfachen sich Konstruktion und Herstellung des Batterieträgers 11. Die Zellen 2 sind in die Trägeraufnahmen 24 eingesetzt, wodurch sie lateral angeordnet und fixiert sind. Die polygone Innenquerschnittskontur der Trägeraufnahmen 24 in Verbindung mit der runden Querschnittskontur der Zellen 2 ist vorteilhaft, da Kontaktflächen zwischen den Zellen 2 und den Trägeraufnahmen 24 klein sind, wodurch eine Fläche der Zellen 2 entsprechend groß ist, welche mit einem Temperiermedium im Kontakt steht. Durch die Anordnung der Zellen 2 sowohl in den Bodenaufnahmen 22 als auch in den Trägeraufnahmen 24 sind die Zellen 2 vollständig angeordnet und vollständig fixiert, sodass eine weitere Fixierung der Zellen 2 nicht erforderlich ist. Das gilt insbesondere auch für Verwendungen der Batterie 1 in Umgebungen, die starke Vibrationen und Erschütterungen für die Batterie 1 bedeuten. Dazu zählen zum Beispiel Verwendungen in mobilen Vorrichtungen.

Der zweite Zellverbinder 5 ist zwischen dem Batteriedeckel 12 und den Zellen 2 angeordnet, und zwar ist er zwischen den Trägeraufnahmen 24 und dem Batteriedeckel 12 angeordnet. Die Abfolge Batteriedeckel 12, dann zweiter Zellverbinder 5 und dann Trägeraufnahmen 24 vereinfacht den Aufbau der Batterie 1.

Der erste Zellverbinder 4 und der zweite Zellverbinder 5 sind aus Blech, und zwar aus einem gestanzten und umgeformten Blech. Insbesondere sind die Öffnungen im ersten Zellverbinder 4 gestanzt.

Jeder der ersten Zellkontakte 13 und der erste Zellverbinder 4 sind elektrisch miteinander verbunden. Weiter sind jeder der zweiten Zellkontakte 14 und der zweite Zellverbinder 5 elektrisch miteinander verbunden. Somit sind die Zellen 2 elektrisch parallel geschaltet. Die Verbindungen sind durch Laserschweißen hergestellt.

Der erste Zellverbinder 4 und der erste Batteriepol 6 sind elektrisch miteinander verbunden. Weiter sind der zweite Zellverbinder 5 und der zweite Batteriepol 7 elektrisch miteinander verbunden. Die Verbindungen sind durch Laserschweißen hergestellt. Eine elektrische Verbindung mit der Batterie 1 erfolgt also über den ersten Batteriepol 6 und den zweiten Batteriepol 7. Im Betrieb der Batterie 1 ist jeder der Batteriepole 6, 7 mit einem elektrischen Leiter verbunden und fließt ein elektrischer Strom über die Leiter und die Batteriepole 6, 7 durch die Batterie 1.

Der erste Batteriepol 6 ist stabförmig ausgebildet und weist eine Batteriepolhalterung 25 auf. Der erste Batteriepol 6 ist mit der Batteriepolhalterung 25 in eine der Trägeraufnahmen 24 eingesetzt. Somit weist die Batterie 1 insgesamt 37 Zellen 2 auf. Die Batteriepolhalterung 25 ist an die Trägeraufnahme 24 angepasst. Demnach weist die Batteriepolhalterung 25 eine zur Trägeraufnahme 24 passende polygone äußere Querschnittskontur auf. Die Formgebung von der Batteriepolhalterung 25 und von der Trägeraufnahme 24 fixiert den ersten Batteriepol 6 gegen ein Verdrehen. Diese Fixierung ist vorteilhaft, da der erste Batteriepol 6 über eine Polschraubverbindung 26 mit einem weiteren elektrischen Leiter verbindbar ist und bei einem Festziehen und Lösen der Polschraubverbindung 26 auftretende Drehmomente vom Batterieträger 11 und nicht vom ersten Zellverbinder 4 aufgenommen werden.

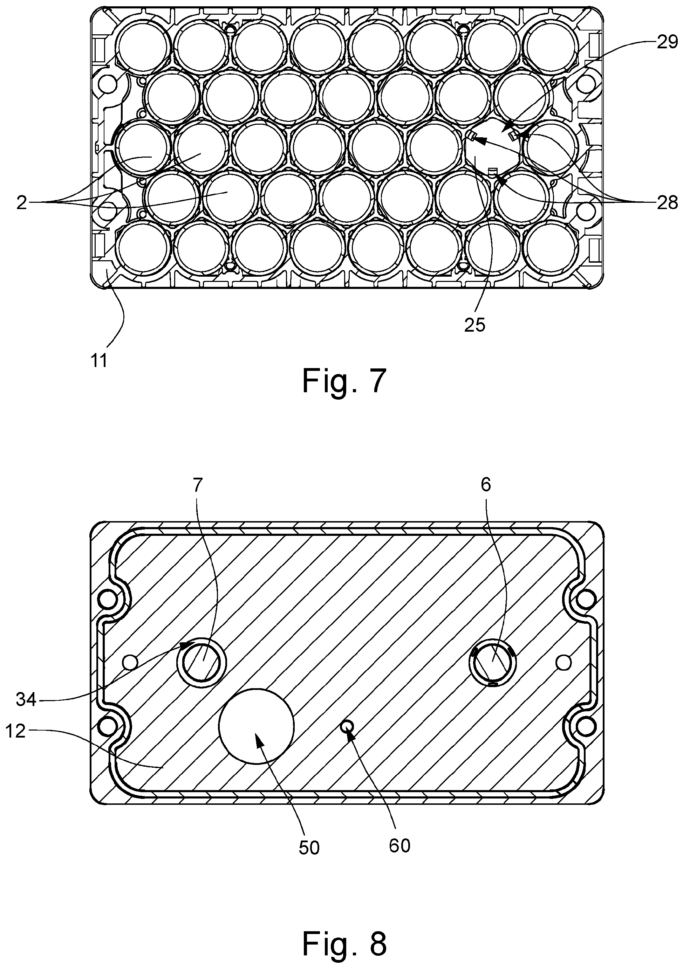

Die Batteriepolhalterung 25 weist eine Mehrzahl an Batteriepolausnehmungen 27 auf. Eine freie Batteriezulaufquerschnittsfläche 28 ist durch die Batteriepolhalterung 25 mit den Batteriepolausnehmungen 27 und die Trägeraufnahme 24 bestimmt, siehe Figur 7. Somit strömt im Betrieb der Batterie 1 ein Temperiermedium durch die Batteriepolausnehmungen 27. Demnach bilden die Batteriepolhalterung 25 mit den Batteriepolausnehmungen 27 und die Trägeraufnahme 24 zusammen eine Durchflussdrossel 29 für ein Temperiermedium am Batteriezulauf 8 in der Batterie 1. Somit ist die Durchflussdrossel 29 durch den Batteriezulauf 8 und den ersten Batteriepol 6 gebildet und ist durch eine Form des ersten Batteriepols 6 eine Durchflussrate eines Temperiermediums eingestellt.

Der zweite Batteriepol 7 ist ebenfalls stabförmig und weist zusätzlich einen Batteriepolkragen 30 auf. Weiter weisen der Batteriepolkragen 30 und der Batterieträger 11 eine formschlüssige Kragenverbindung 31 auf, sodass der zweite Batteriepol 7 gegen ein Verdrehen fixiert ist. Die Kragenverbindung 31 weist im Batterieträger 11 zwei Kragenvorsprünge 32 und im Batteriepolkragen 30 zwei entsprechende Kragenausnehmungen 33 auf. Diese Fixierung ist vorteilhaft, da der zweite Batteriepol 7 über eine Polschraubverbindung 26 mit einem weiteren elektrischen Leiter verbindbar ist und bei einem Festziehen und Lösen der Polschraubverbindung 26 auftretende Drehmomente vom Batterieträger 11 und nicht vom zweiten Zellverbinder 5 aufgenommen werden.

Eine freie Batterieablaufquerschnittsfläche 34 ist durch den zweiten Batteriepol 7 und den Batterieablauf 9 bestimmt, indem der zweite Batteriepol 7 durch den Batterieablauf 9 nach außen geführt ist, siehe Figur 8. Die Batterieablaufquerschnittsfläche 34 ist größer als die Batteriezulaufquerschnittsfläche 28, sodass sich im Batterieinnenraum 15 kein übermäßiger Druck durch ein durch den Batterieinnenraum 15 strömendes Temperiermedium aufbaut.

Der erste Batteriepol 6, der zweite Batteriepol 7, der Batteriezulauf 8 und der Batterieablauf 9 sind im Batteriedeckel 12 angeordnet, wodurch die Handhabung der Batterie 1 vereinfacht ist.

Die ersten elektrischen Zellkontakte 13 und die zweiten elektrischen Zellkontakte 14 der Zellen 2, der erste Zellverbinder 4 und der zweite Zellverbinder 5 sind elektrische Leiter und im Batterieinnenraum 15 angeordnet. Deshalb sind sie im unmittelbaren Kontakt mit einem Temperiermedium, welches durch den Batterieinnenraum 15 geströmt wird. Folglich ist ein geeignetes Temperiermedium elektrisch isolierend, sodass die Zellen 2 nicht über das Temperiermedium entladen werden. Hinzu kommt, dass auch die Verbindungen zwischen den ersten Zellkontakten 13 und dem ersten Zellverbinder 4, die Verbindungen zwischen den zweiten Zellkontakten 14 und dem zweiten Zellverbinder 5, die Verbindung zwischen dem ersten Zellverbinder 4 und dem ersten Batteriepol 6 und die Verbindung zwischen dem zweiten Zellverbinder 5 und dem zweiten Batteriepol 7 durch ein durch den Batterieinnenraum 15 strömendes Temperiermedium umspült und dadurch gekühlt sind. Das ist nicht nur in diesem Ausführungsbeispiel der Fall, sondern ein grundlegendes Merkmal.

Beim Zusammenbau der Batterie 1 werden zunächst der Batteriepolkragen 30 und der zweite Zellverbinder 5 elektrisch leitendend miteinander verbunden, zum Beispiel verschweißt. Dann werden die Zellen 2 in die Trägeraufnahmen 24 gesetzt und die zweiten Zellkontakte 14 und der zweite Zellverbinder 5 wie beschrieben miteinander verbunden. Dann werden der übrige zweite Batteriepol 7 und der Batteriepolkragen 30 miteinander verbunden, zum Beispiel verschweißt. Dann werden die ersten Zellkontakte 13 und der erste Zellverbinder 4 wie beschrieben miteinander verbunden. Dann werden zum einen der Batterieboden 10 und der Batterieträger 11 und zum anderen der Batteriedeckel 12 und der Batterieträger 11 wie beschrieben miteinander verbunden. Die Bodenaufnahmen 22 ordnen an und fixieren lateral dabei sowohl den ersten elektrischen Zellverbinder 4 als auch die Zellen 2.

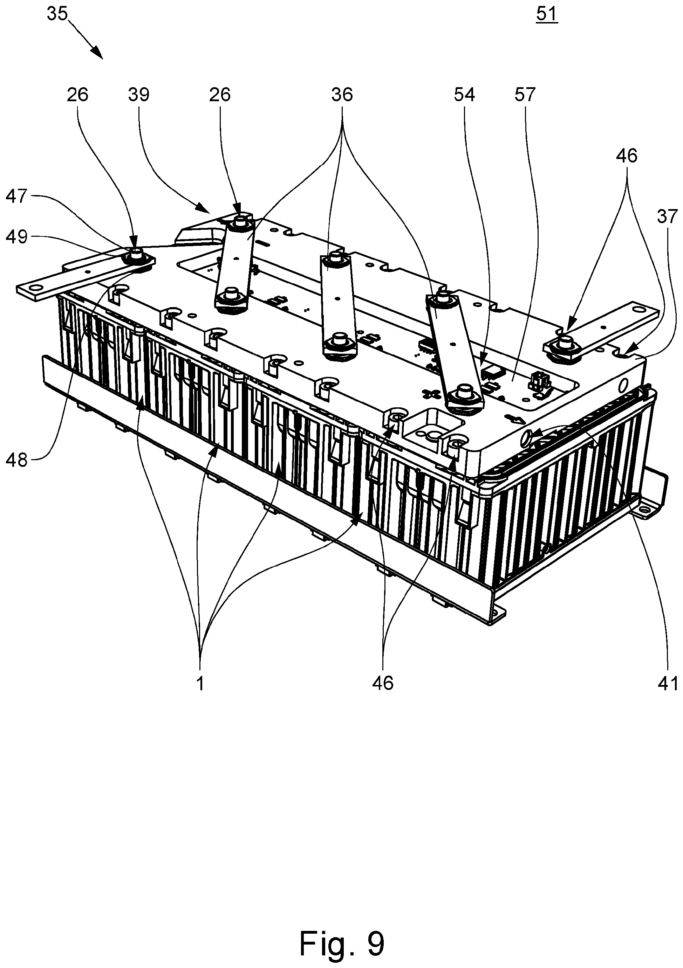

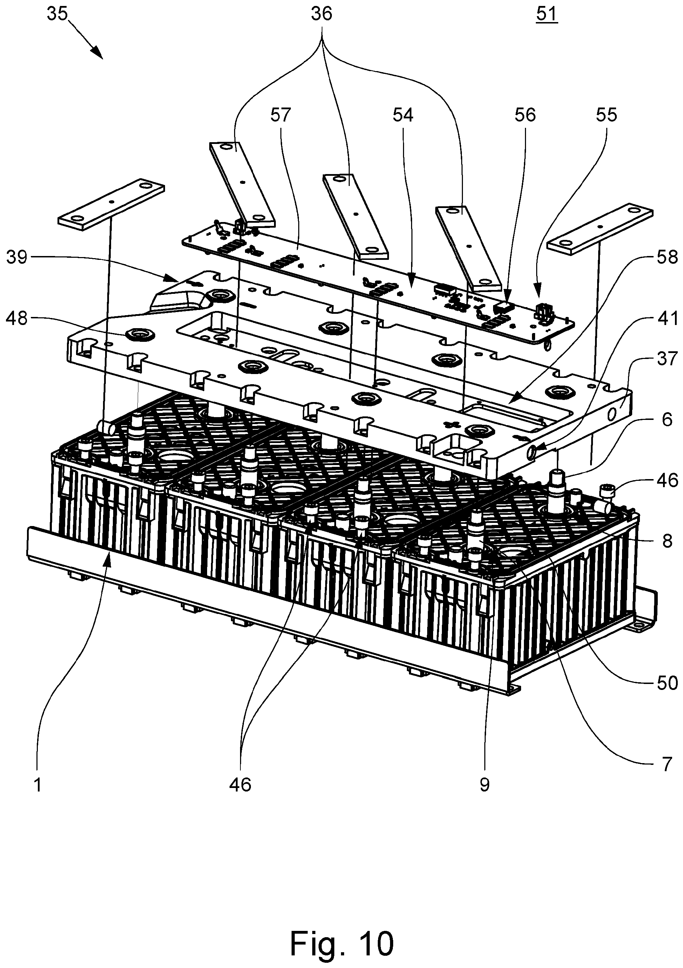

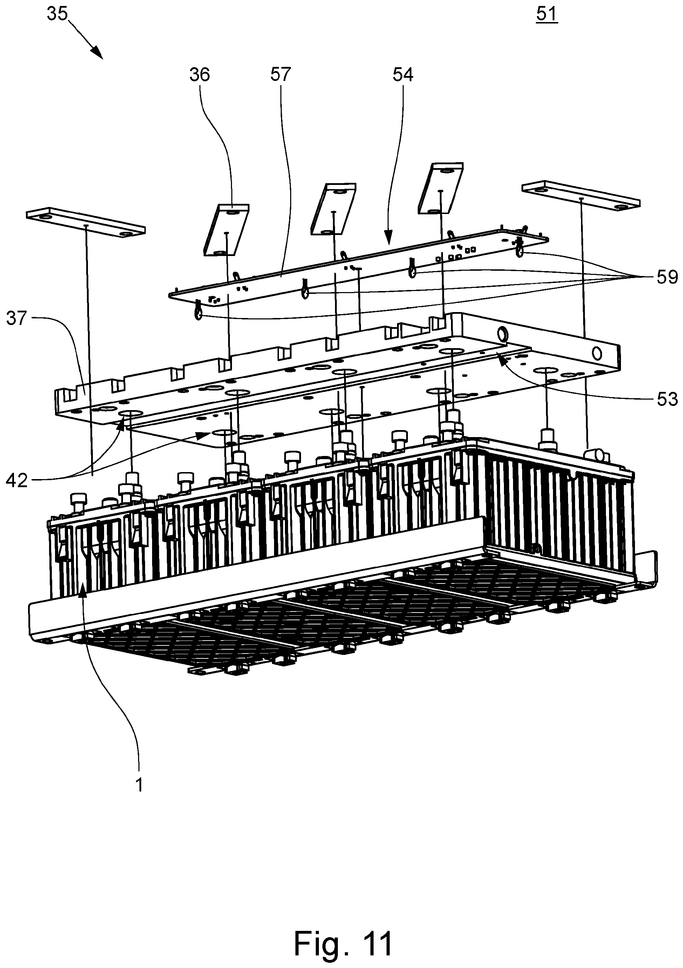

Figur 9 zeigt eine perspektivische Ansicht eines Ausführungsbeispiels eines Batterieverbunds 35. Die Figuren 10 und 11 zeigen unterschiedliche Ansichten einer Explosionsdarstellung des Batterieverbunds 35.

Der Batterieverbund 35 weist vier Batterien 1 des zuvor beschriebenen Ausführungsbeispiels, drei elektrische Verbundleiter 36 und einen Verbundkopf 37 auf.

Der Verbundkopf 37 ist auf den Batteriedeckeln 12 der Batterien 1 angeordnet und weist einen Verbundzulaufkanal 38 mit einem Verbundzulaufanschluss 39 und einen Verbundablaufkanal 40 mit einem Verbundablaufanschluss 41 auf. Sowohl der Verbundzulaufkanal 38 als auch der Verbundablaufkanal 40 sind jeweils durch eine Durchgangsbohrung durch den ganzen Verbundkopf 37 gebildet. Jede der Durchgangsbohrungen ist an einem ihrer beiden Enden verschlossen. Das jeweils offene Ende mündet im Verbundzulaufanschluss 39 bzw. Verbundablaufanschluss 41.

Die ersten Batteriepole 6 und die zweiten Batteriepole 7 sind durch den Verbundkopf 37 hindurchgeführt. Dazu weist der Verbundkopf 37 zu den Batteriepolen 6, 7 passende Polöffnungen 42 auf. Dadurch sind die Batteriepole 6, 7 von außen und von einer Seite des Batterieverbunds 35 zugänglich, wodurch insbesondere ein Montieren und Demontieren der Verbundleiter 36 und weiterer Leiter an den Batteriepolen 6, 7 erleichtert ist.

Einerseits sind jeder der Batteriezuläufe 8 und der Verbundzulaufkanal 38 und andererseits jeder der Batterieabläufe 9 und der Verbundablaufkanal 40 unmittelbar und dicht für ein Temperiermedium über Verbundverbindungen 43 miteinander verbunden. Diese Verbundverbindungen 43 sind dadurch erreicht, dass die Bohrungen, welche den Verbundzulaufkanal 38 und den Verbundablaufkanal 40 bilden, die Polöffnungen 42 anschneiden, sodass im Betrieb des Batterieverbunds 35 ein Temperiermedium unmittelbar aus der Bohrung des Verbundzulaufkanals 38 in die Batteriezuläufe 8 strömt und dass Temperiermedium aus den Batterieabläufen 9 unmittelbar in die Bohrung des Verbundablaufkanals 40 strömt.

Einerseits sind jeder der ersten Batteriepole 6 und der Verbundkopf 37 und andererseits jeder der zweiten Batteriepole 7 und der Verbundkopf 37 jeweils durch eine O-Ring-Dichtung erster Art 44 für ein Temperiermedium zueinander abgedichtet. Diese O-Ring-Dichtungen erster Art 44 bewirken, dass ein Temperiermedium nicht zwischen den Batteriepolen 6, 7 und dem Verbundkopf 37 nach außen dringen kann. Weiter sind einerseits jeder der Batteriezuläufe 8 und der Verbundkopf 37 und andererseits jeder der Batterieabläufe 9 und der Verbundkopf 37 jeweils durch eine O-Ring-Dichtung zweiter Art 45 für ein Temperiermedium zueinander abgedichtet. Diese O-Ring-Dichtungen zweiter Art 45 bewirken, dass ein Temperiermedium nicht zwischen den Batteriezuläufen 8 oder Batterieabläufen 9 und dem Verbundkopf 37 nach außen dringen kann. Somit ist der Batterieverbund 35 abgesehen vom Verbundzulaufanschluss 39 und vom Verbundablaufanschluss 41 dicht für ein Temperiermedium.

Im Betrieb des Batterieverbunds 35 strömt ein Temperiermedium über den Verbundzulaufanschluss 39 in den Verbundzulaufkanal 38 hinein und strömt über den Verbundablaufanschluss 41 aus dem Verbundablaufkanal 40 hinaus. Durch die Verbundverbindungen 43 einerseits der Batteriezuläufe 8 mit dem Verbundzulaufkanal 38 und andererseits der Batterieabläufe 9 mit dem Verbundablaufkanal 40 sind die einzelnen Batterien 1 hydraulisch parallel zueinander geschaltet und strömt das Temperiermedium durch jede der Batterien 1. Durch die hydraulische Parallelschaltung liegen Temperaturen der Batterien 1 näher beieinander, als wenn die Batterien 1 hydraulisch in Reihe geschaltet sind, wodurch eine Temperaturverteilung des Batterieverbunds 35 homogener ist.

Jede der vier Batterien 1 und der Verbundkopf 37 sind durch jeweils vier Verbundschraubverbindungen 46 miteinander verbunden. Weiter weist, wie bereits beschrieben worden ist, jeder der ersten Batteriepole 6 und jeder der zweiten Batteriepole 7 jeweils eine Polschraubverbindung 26 auf. Und zwar weist jede der Polschraubverbindungen 26 ein Polgewinde 47 im Batteriepol 6, 7 und eine Polmutter 48 passend zum Polgewinde 47 auf. Die Polschraubverbindungen 26 fixieren den Verbundkopf 37 und die Batteriedeckel 12 zueinander und bewirken eine Dichtwirkung der zuvor beschriebenen O-Ring-Dichtungen 44, 45. Weiter fixieren sowohl die Polschraubverbindungen 26 als auch die Verbundschraubverbindungen 46 den Verbundkopf 37 und die vier Batterien 1 zueinander.

Die vier Batterien 1 sind durch die drei Verbundleiter 36 elektrisch miteinander verbunden. Und zwar sind die ersten Batteriepole 6 und die zweiten Batteriepole 7 durch die Verbundleiter 36 derart elektrisch miteinander verbunden, sodass die Batterien elektrisch in Reihe geschaltet sind. Dabei sind die Verbundleiter 36 und die Batteriepole 6, 7 durch die Polschraubverbindungen 26 elektrisch miteinander verbunden. Dazu weist jede der Polschraubverbindungen 26 eine zusätzliche Polmutter 49 auf und sind die Polgewinde 47 gestuft, sodass die Verbundleiter 36 auf den Batteriepolen 6, 7 aufliegen, wodurch eine elektrische Kontaktfläche zur Leitung von Strom entsteht.

Der Batterieverbund 35 weist Durchflussdrosseln 29 auf, sodass ein Temperiermedium durch jede der Batterien mit einer ausreichenden Durchflussrate strömt.

Jede der vier Batterien 1 weist, wie bereits beschrieben worden ist, eine Durchflussdrossel 29 auf. Jede dieser Durchflussdrosseln 29 ist durch den Batteriezulauf 8 und den ersten Batteriepol 6 gebildet. Eine Durchflussrate einer solchen Durchflussdrossel 29 ist durch eine Form des ersten elektrischen Batteriepols 6 eingestellt.

In diesem Ausführungsbeispiel sind zusätzlich im Verbundkopf 37 vier weitere Durchflussdrosseln 29 angeordnet. Und zwar sind die Durchflussdrosseln 29 durch die Verbundverbindungen 43 zwischen einerseits dem Verbundzulaufkanal 38 und andererseits den Batteriezuläufen 8 gebildet. Eine Drosselwirkung der Durchflussdrosseln 29 ist durch eine freie Querschnittsfläche der Verbundverbindungen 43 eingestellt, durch welche ein Temperiermedium strömt.

Bei jeder der Batterien 1 ist auf einer Außenseite des Batteriedeckels 12 eine Überdrucköffnung 50 ausgebildet. Die Überdrucköffnung 50 verbindet den Batterieinnenraum 15 mit einem Außenraum 51 und ist durch eine spröde Berstscheibe 52 als Überdruckventil dicht für ein Temperiermedium verschlossen. Der Verbundkopf 37 weist eine Überdruckausnehmung 53 auf. Die Überdruckausnehmung 53 überdeckt die Überdrucköffnungen 50 der Batterien 1, sodass ein Überdruck aus den Batterien 1 über die Überdrucköffnungen 50 und die Überdruckausnehmung 53 nach außen in den Außenraum 51 abführbar ist.

Der Batterieverbund 35 weist eine elektrische Verbundschaltung 54 mit einer elektrischen Verbundschnittstelle 55 zur Kommunikation mit einem weiteren elektrischen Gerät auf. Weiter weist die Verbundschaltung 54 eine galvanische Trennung 56 für die Kommunikation über die Verbundschnittstelle 55 auf. Die Verbundschaltung 54 ist zur Überwachung des Batterieverbunds 35 und zur Kommunikation über die Verbundschnittstelle 55 ausgebildet. Weiter ist die Verbundschaltung 54 zur Versorgung aus einer der vier Batterien 1 ausgebildet und wird im Betrieb des Batterieverbunds 35 aus einer der vier Batterien 1 des Batterieverbunds 35 versorgt.

Die Verbundschaltung 54 ist auf einer Verbundplatine 57 realisiert und die Verbundplatine 57 ist auf dem Verbundkopf 37 angeordnet. Der Verbundkopf 37 weist eine Platinenausnehmung 58 auf und die Verbundplatine 57 ist in der Platinenausnehmung 58 versenkt angeordnet. Die versenkte Anordnung der Verbundplatine 57 ist derart, dass sie außerhalb der Platinenausnehmung 58 nicht über den Verbundkopf 37 hinausragt. Durch die versenkte Anordnung der Verbundplatine 57 ist diese geschützt und ein Platzbedarf des Batterieverbunds 35 ist reduziert.

Die Verbundschaltung 54 weist vier Temperatursensoren 59 auf und ist zur Messung von Temperaturen mit den Temperatursensoren 59 ausgebildet. Die Temperatursensoren 59 sind zur Messung von Temperaturen des Batterieverbunds 35 ausgebildet und am Batterieverbund 35 angeordnet. Die Anordnung der Temperatursensoren 59 am Batterieverbund 35 ist derart, dass bei jeder der vier Batterien 1 auf einer Außenseite des Batteriedeckels 12 eine Sensorausnehmung 60 ausgebildet ist und jeweils einer der Temperatursensoren 59 in der Sensorausnehmung 60 angeordnet ist. Die Ausbildung der Sensorausnehmungen 60 in den Batteriedeckeln 12 ist derart, dass ein thermischer Widerstand zwischen den Temperatursensoren 59 und einem im Betrieb des Batterieverbunds 35 in den Batterieinnenräumen 15 befindlichen Temperiermediums möglichst gering ist.

Die Verbundschaltung 54 ist weiter ausgebildet, Differenztemperaturen aus den mit den Temperatursensoren 59 gemessenen Temperaturen zu bilden, die Differenztemperaturen mit einer vorgegebenen zulässigen Maximaldifferenztemperatur zu vergleichen und ein Überschreiten der Maximaldifferenztemperatur zu signalisieren. Somit sind Differenztemperaturen überwachbar. Diese Ausbildung der Verbundschaltung 54 ist allgemein ab mindestens zwei Temperatursensoren 59 gegeben.

Weiter ist die Verbundschaltung 54 zur Messung einer Spannung und zum Bestimmen und zum Einstellen eines Ladezustands einer jeden der vier Batterien 1 ausgebildet. Insbesondere werden die Ladezustände der vier Batterien 1 derart eingestellt, dass sie einander gleich sind. Zum Beispiel wird der Ladezustands der Batterien 1 aus den Spannungen der Batterien 1 unter Verwendung einer Kennlinie bestimmt, welche den Ladezustand der Batterien 1 in Abhängigkeit der Spannung wiedergibt.

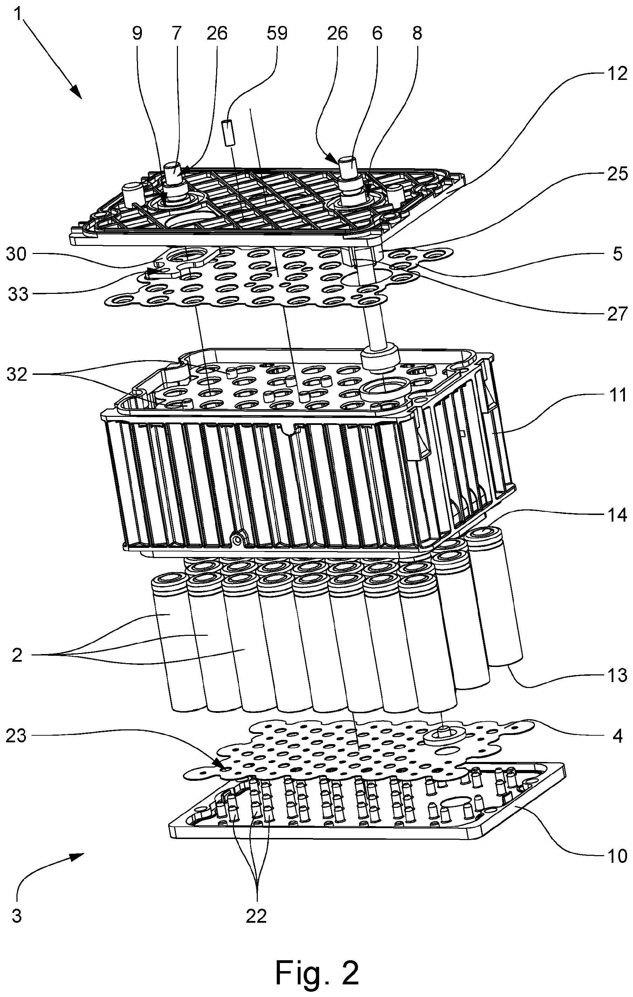

Wenn in der Beschreibung des Ausführungsbeispiels auf eine Mehrzahl einer Komponente in einer Figur verwiesen wird und das zur Komponente gehörige Bezugszeichen in der Figur nicht auf alle Komponenten verweist, sind dennoch alle Komponenten gemeint. Zum Beispiel wird in der Beschreibung auf die Zellen verwiesen und in Figur 2 verweist das Bezugszeichen 2 nur auf drei der Zellen. Dennoch sind alle Zellen gemeint.

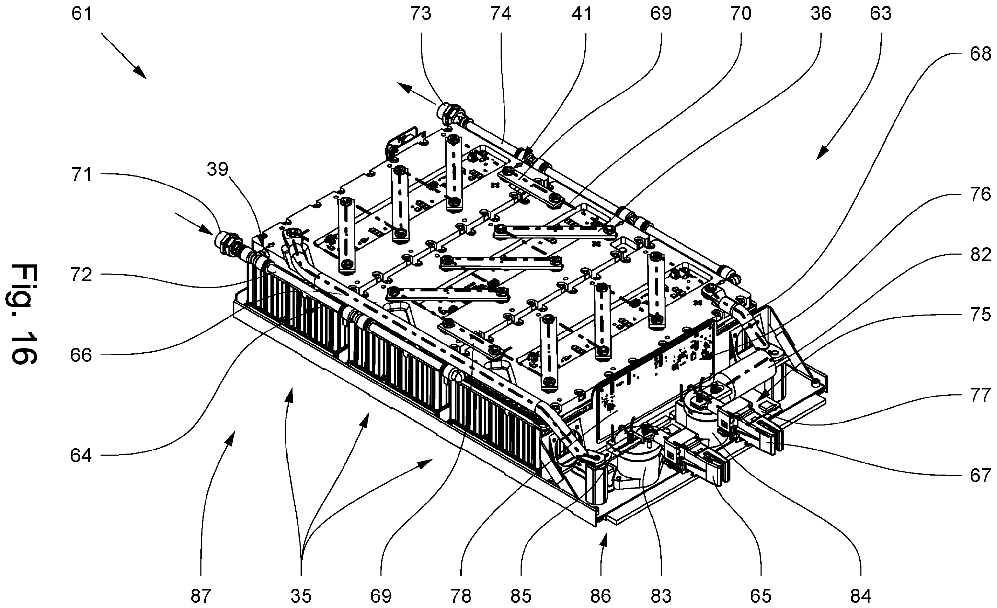

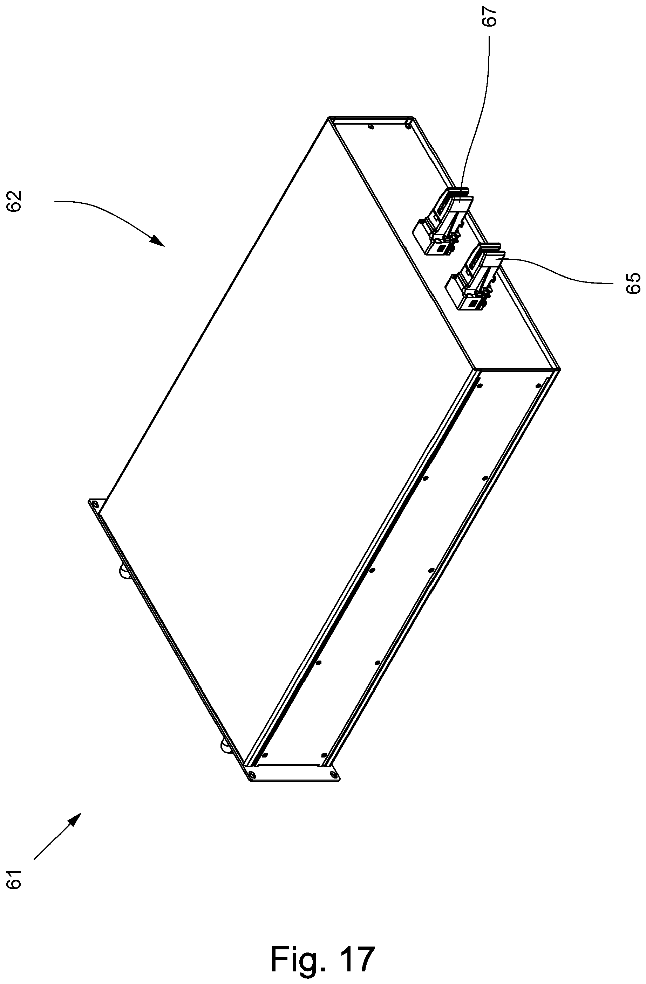

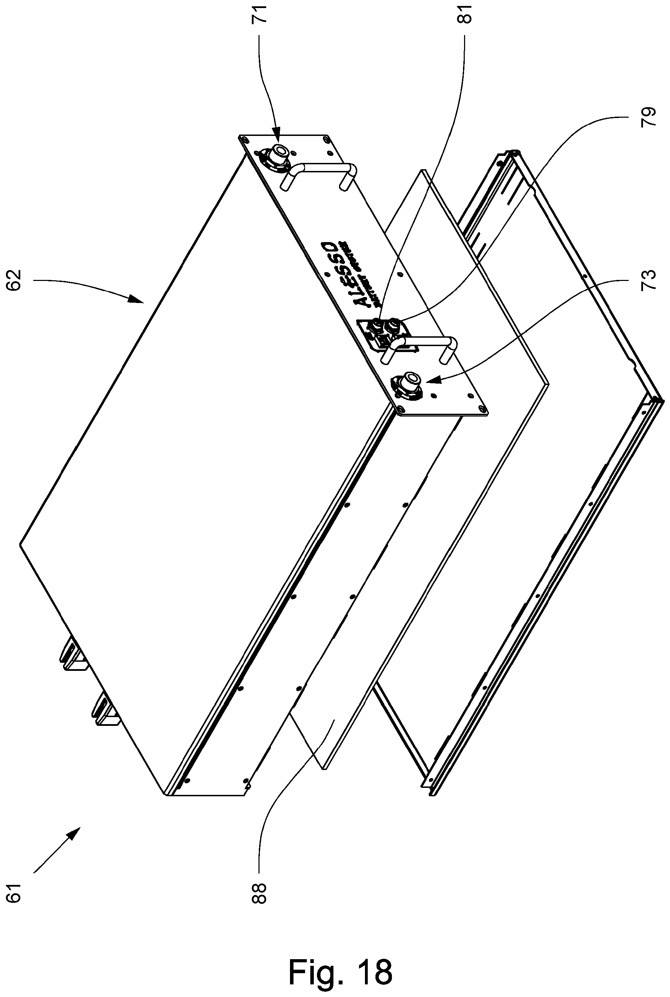

Figur 16 zeigt eine perspektivische Ansicht eines Ausführungsbeispiels eines Batteriesystems 61 ohne und die Figuren 17 und 18 zeigen unterschiedliche perspektivische Ansichten des Batteriesystems 61 mit einem Systemgehäuse 62. Das Batteriesystem 61 ist sowohl für eine Versorgung von Verbrauchern mit elektrischer Energie als auch zur Speicherung von elektrischer Energie vorgesehen, die von Generatoren erzeugt wird.

Das Batteriesystem 61 weist neben dem Systemgehäuse 62 eine Leistungsverschaltung 63, eine Temperiermediumversorgung 64 und drei Batterieverbünde 35 des zuvor beschriebenen Ausführungsbeispiels auf. Die drei Batterieverbünde 35 sind im Systemgehäuse 62 angeordnet.

Die Leistungsverschaltung 63 weist einen ersten Leistungsanschluss 65, eine mit dem ersten Leistungsanschluss 65 elektrisch verbundene erste Leistungsleitung 66, einen zweiten Leistungsanschluss 67, eine mit dem zweiten Leistungsanschluss 67 elektrisch verbundene zweite Leistungsleitung 68, zwei Leistungsleiter 69 und einen Leistungspfad 70 auf. Die drei Batterieverbünde 35 sind durch die zwei Leistungsleiter 69 elektrisch in Reihe geschaltet. Die erste Leistungsleitung 66 und die zweite Leistungsleitung 68 sind dementsprechend mit den Batterieverbünden 35 elektrisch verbunden.

Der Leistungspfad 70 erstreckt sich zwischen dem ersten Leistungsanschluss 65 und dem zweiten Leistungsanschluss 67 und ist durch eine Strichpunktlinie in Figur 16 wiedergegeben. Die erste Leistungsleitung 66, die drei Batterieverbünde 35 mit den Verbundleitern 36, die zwei Leistungsleiter 69 und die zweite Leistungsleitung 68 liegen im Leistungspfad 70. Die Batterieverbünde 35 sind vollständig elektrisch angeschlossen, da die Batteriepole 6, 7 durch die Verbundleiter 36 und die Leistungsleiter 69 mit elektrischen Leitern verbunden sind. Der erste Leistungsanschluss 65 und der zweite Leistungsanschluss 67 sind von außen zugänglich am Systemgehäuse 62 angeordnet.

Die Temperiermediumversorgung 64 weist einen Systemzulaufanschluss 71, eine mit dem Systemzulaufanschluss 71 verbundene Systemzulaufleitung 72, einen Systemablaufanschluss 73 und eine mit dem Systemablaufanschluss 73 verbundene Systemablaufleitung 74 auf. Der Systemzulaufanschluss 71 und der Systemablaufanschluss 73 sind von außen zugänglich am Systemgehäuse 62 angeordnet. Die Systemzulaufleitung 72 und die Systemablaufleitung 74 sind mit den drei Batterieverbünden 35 zur Durchströmung der Batterieverbünde 35 mit einem Temperiermedium verbunden.

Einerseits sind die Systemzulaufleitung 72 und jeder der drei Verbundzulaufkanäle 38 über den jeweiligen Verbundzulaufanschluss 39 und andererseits sind die Systemablaufleitung 74 und jeder der drei Verbundablaufkanäle 40 über den jeweiligen Verbundablaufanschluss 41 miteinander verbunden. Durch diese Verbindungen sind die drei Batterieverbünde 35 hydraulisch parallel zueinander geschaltet und strömt im Betrieb ein Temperiermedium durch jeden der drei Batterieverbünde 35. Jeder der drei Batterieverbünde 35 weist eine der zuvor beschriebenen Durchflussdrosseln auf, sodass im Betrieb eine Durchflussrate eines Temperiermediums durch jeden der drei Batterieverbünde 35 zumindest annähernd gleich ist.

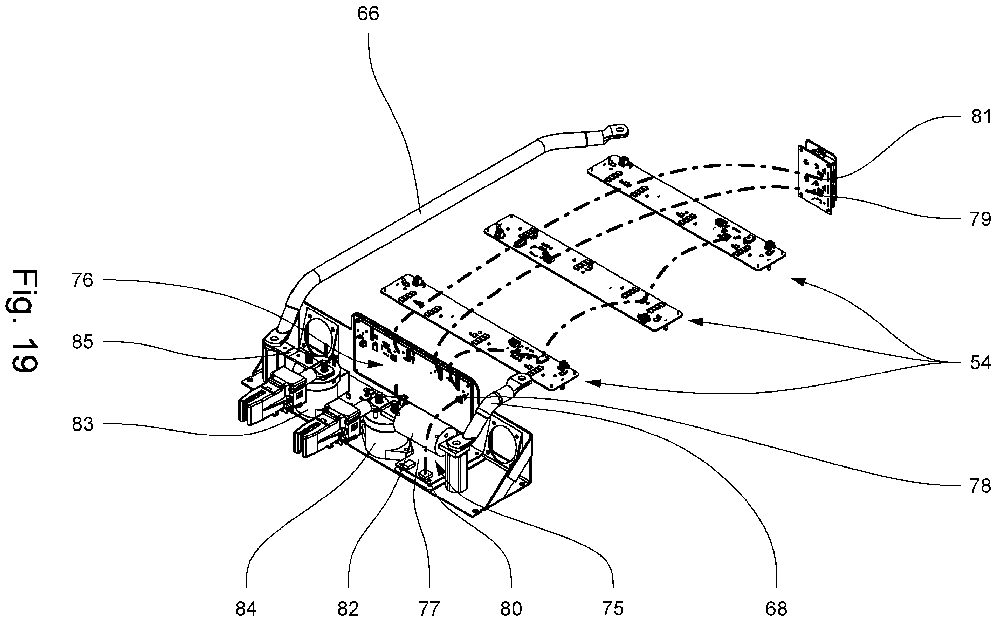

Weiter weist das Batteriesystem 61 eine elektrische Systemschaltung 75 zur Überwachung des Batteriesystems 61 und eine elektrische Systemsteuerung 76 zur Steuerung des Batteriesystems 61 auf, siehe insbesondere Figur 19. Die Systemschaltung 75 ist auf einer Systemschaltungsplatine 77 und die Systemsteuerung 76 ist auf einer Systemsteuerungsplatine 78 realisiert. Die Systemschaltung 75 ist zur Versorgung aus mindestens einer der Batterien 1 ausgebildet und die Systemsteuerung 76 ist zur Versorgung aus einer externen Energiequelle ausgebildet. Demnach wird die Systemschaltung 75 im Betrieb des Batteriesystems 61 mit elektrischer Energie aus einer der Batterien 1 versorgt und die Systemsteuerung 76 aus einer externen Energiequelle. Folglich weist das Batteriesystem 61 einen von außen zugänglichen elektrischen Anschluss 79 zum Anschluss an eine externe Energiequelle auf. Die elektrische Verbindung zwischen dem Anschluss 79 und der Systemsteuerung 76 ist in Figur 19 durch eine Stichpunktlinie wiedergegeben.

Die Systemschaltung 75 weist eine Systemschnittstelle 80 auf und die Systemschaltung 75 und die Systemsteuerung 76 sind über die Systemschnittstelle 80 zur Kommunikation miteinander ausgebildet. Die Systemschnittstelle 80 weist eine galvanische Trennung auf. Die elektrische Verbindung zwischen der Systemschnittstelle 80 und der Systemsteuerung 76 ist in Figur 19 durch eine Strichpunktlinie wiedergegeben.

Die Systemsteuerung 76 ist über die Verbundschnittstelle 55 der Verbundschaltung 54 des zur Systemsteuerung 76 nächstliegenden Batterieverbunds 35 mit diesem verbunden. Diese Verbindung ist in Figur 19 durch eine Strichpunktlinie wiedergegeben. Die Systemsteuerung 76 und die drei Batterieverbünde 35 sind zur Kommunikation miteinander ausgebildet. Jeweils zwei aneinandergrenzende Batterieverbünde 35 sind über die Verbundschnittstelle 55 der Verbundschaltung 54 einer der Batterieverbünde 35 miteinander verbunden, und zwar in der Art einer Daisy Chain. Diese Verbindungen sind in Figur 19 durch Strichpunktlinien wiedergeben. Auf diese Weise kann die Systemsteuerung mit jedem der drei Batterieverbünde 35 kommunizieren.

Die Systemsteuerung 76 weist einen Systemanschluss 81 auf und die Systemsteuerung 76 ist zur Kommunikation über den Systemanschluss 81 ausgebildet. Der Systemanschluss 81 ist von außen zugänglich am Systemgehäuse 62 angeordnet. Die elektrische Verbindung zwischen der Systemsteuerung 76 und dem Systemanschluss 81 ist in Figur 19 durch eine Strichpunktlinie wiedergegeben.

Die Systemschaltung 75 weist die folgenden Komponenten auf, die im Leistungspfad 70 angeordnet sind:
- Eine Schmelzsicherung 82,
- ein in der ersten Leistungsleitung 66 angeordnetes erstes Schütz 83,
- ein in der zweiten Leistungsleitung 68 angeordnetes zweites Schütz 84 und
- einen im Leistungspfad angeordneten Shunt 85 zur Messung eines Stroms im Leistungspfad.

Die Systemsteuerung 76 ist zur Detektion eines Zustands der Schmelzsicherung 82, zur Steuerung des ersten Schützes 83 und des zweiten Schützes 84 und zur Messung eines Stroms durch den Shunt 85 ausgebildet. Wenn eines der Schütze 83, 84 durch die Systemsteuerung 76 angesteuert ist, ist der Leistungspfad 70 ununterbrochen, und wenn eines der Schütze 83, 84 nicht angesteuert ist, ist der Leistungspfad unterbrochen.

Das Systemgehäuse weist einen Systembereich 86 und einen Batteriebereich 87 auf und der Systembereich 86 und der Batteriebereich 87 sind voneinander räumlich separiert. Die Systemschaltung 75 und die Systemsteuerung 76 sind im Systembereich 86 und die drei Batterieverbünde 35 sind im Batteriebereich 87 angeordnet. Durch die Separation sind einerseits die Systemschaltung 75 und die Systemsteuerung 76 und andererseits die drei Batterieverbünde 35 voreinander geschützt. Weiter sind im Systembereich 86 zwei hier nicht dargestellte Ventilatoren zur Umwälzung der Luft im Systembereich 86 angeordnet.

Zwischen den Batterieböden 10 der Batterien 1 der drei Batterieverbünde 35 und dem Systemgehäuse 62 ist eine temperaturisolierende und feuerfeste Einlage 88 angeordnet, siehe Figur 18, in welcher das Systemgehäuse 62 teilweise in einer Explosionsdarstellung gezeigt ist. Die Einlage 88 weist Glaswolle auf.

Weiter ist im Systemgehäuse 62 eine hier nicht sichtbare Gasöffnung ausgebildet, sodass ein aus mindestens einer der Batterien 1 austretendes Gas zunächst durch die Glaswolle und dann durch die Gasöffnung aus dem Systemgehäuse 62 strömt.

### Bezugszeichen

- 1: Batterie
- 2: Zelle
- 3: Batteriegehäuse
- 4: erster elektrischer Zellverbinder
- 5: zweiter elektrischer Zellverbinder
- 6: erster elektrischer Batteriepol
- 7: zweiter elektrischer Batteriepol
- 8: Batteriezulauf
- 9: Batterieablauf
- 10: Batterieboden
- 11: Batterieträger
- 12: Batteriedeckel
- 13: erster elektrischer Zellkontakt
- 14: zweiter elektrischer Zellkontakt
- 15: Batterieinnenraum
- 16: Bodenkontaktfläche
- 17: erste Nut
- 18: erste Feder
- 19: Deckelkontaktfläche
- 20: zweite Nut
- 21: zweite Feder
- 22: Bodenaufnahme
- 23: Bodenausnehmung
- 24: Trägeraufnahme
- 25: Batteriepolhalterung
- 26: Polschraubverbindung
- 27: Batteriepolausnehmung
- 28: Batteriezulaufquerschnittsfläche
- 29: Durchflussdrossel
- 30: Batteriepolkragen
- 31: Kragenverbindung
- 32: Kragenvorsprung
- 33: Kragenausnehmung
- 34: Batterieablaufquerschnittsfläche
- 35: Batterieverbund
- 36: Verbundleiter
- 37: Verbundkopf
- 38: Verbundzulaufkanal
- 39: Verbundzulaufanschluss
- 40: Verbundablaufkanal
- 41: Verbundablaufanschluss
- 42: Polöffnungen
- 43: Verbundverbindung
- 44: O-Ring-Dichtung erster Art
- 45: O-Ring-Dichtung zweiter Art
- 46: Verbundschraubverbindung
- 47: Polgewinde
- 48: Polmutter
- 49: zusätzliche Polmutter
- 50: Überdrucköffnung
- 51: Außenraum
- 52: Berstscheibe
- 53: Überdruckausnehmung
- 54: elektrische Verbundschaltung
- 55: elektrische Verbundschnittstelle
- 56: galvanische Trennung
- 57: Verbundplatine
- 58: Platinenausnehmung
- 59: Temperatursensor
- 60: Sensorausnehmung
- 61: Batteriesystem
- 62: Systemgehäuse
- 63: Leistungsverschaltung
- 64: Temperiermediumversorgung
- 65: erster Leistungsanschluss
- 66: erste Leistungsleitung
- 67: zweite Leistungsanschluss
- 68: zweite Leistungsleitung
- 69: Leistungsleiter
- 70: Leistungspfad
- 71: Systemzulaufanschluss
- 72: Systemzulaufleitung
- 73: Systemablaufanschluss
- 74: Systemablaufleitung
- 75: Systemschaltung
- 76: Systemsteuerung
- 77: Systemschaltungsplatine
- 78: Systemsteuerungsplatine
- 79: Anschluss
- 80: Systemschnittstelle
- 81: Systemanschluss
- 82: Schmelzsicherung
- 83: erstes Schütz
- 84: zweites Schütz
- 85: Shunt
- 86: Systembereich
- 87: Batteriebereich
- 88: Einlage

## Patentansprüche

1. Batteriesystem (61) mit einem Systemgehäuse (62), einer Leistungsverschaltung (63), einer Temperiermediumversorgung (64) und mindestens einem Batterieverbund (35),
wobei der mindestens eine Batterieverbund (35) mindestens zwei Batterien (1) und mindestens einen elektrischen Verbundleiter (36) aufweist und im Systemgehäuse (62) angeordnet ist,
wobei jede der Batterien (1) ein Batteriegehäuse (3), einen ersten elektrischen Batteriepol (6), einen zweiten elektrischen Batteriepol (7), einen Batteriezulauf (8) und einen Batterieablauf (9) für ein Temperiermedium und mindestens eine Zelle (2) aufweist,
wobei jedes der Batteriegehäuse (3) einen Batterieboden (10), einen Batterieträger (11) und einen Batteriedeckel (12) aufweist und der Batterieboden (10), der Batterieträger (11) und der Batteriedeckel (12) einen Batterieinnenraum (15) abgesehen vom Batteriezulauf (8) und vom Batterieablauf (9) dicht für ein Temperiermedium umschließen,
wobei die mindestens eine Zelle (2) einer jeden der Batterien (1) im Batterieinnenraum (15) der Batterie (1) zur Umspülung mit einem Temperiermedium angeordnet ist,
wobei die mindestens zwei Batterien (1) durch den mindestens einen Verbundleiter (36) elektrisch miteinander verbunden sind,
wobei die Leistungsverschaltung (63) einen ersten Leistungsanschluss (65), eine mit dem ersten Leistungsanschluss (65) elektrisch verbundene erste Leistungsleitung (66), einen zweiten Leistungsanschluss (67), eine mit dem zweiten Leistungsanschluss (67) elektrisch verbundene zweite Leistungsleitung (68) und einen Leistungspfad (70) aufweist,
wobei die erste Leistungsleitung (66) und die zweite Leistungsleitung (68) mit dem mindestens einen Batterieverbund (35) elektrisch verbunden sind,
wobei sich der Leistungspfad (70) zwischen dem ersten Leistungsanschluss (65) und dem zweiten Leistungsanschluss (67) erstreckt und die erste Leistungsleitung (66), der mindestens eine Batterieverbund (35) und die zweite Leistungsleitung (68) im Leistungspfad (70) liegen,
wobei der erste Leistungsanschluss (65) und der zweite Leistungsanschluss (67) von außen zugänglich am Systemgehäuse (62) angeordnet sind,
wobei die Temperiermediumversorgung (64) einen Systemzulaufanschluss (71), eine mit dem Systemzulaufanschluss (71) verbundene Systemzulaufleitung (72), einen Systemablaufanschluss (73) und eine mit dem Systemablaufanschluss (73) verbundene Systemablaufleitung (74) aufweist,
wobei der Systemzulaufanschluss (71) und der Systemablaufanschluss (73) von außen zugänglich am Systemgehäuse (62) angeordnet sind und
wobei die Systemzulaufleitung (72) und die Systemablaufleitung (74) mit dem mindestens einen Batterieverbund (35) zur Durchströmung mit einem Temperiermedium verbunden sind,
**dadurch gekennzeichnet,**
**dass** bei jeder der Batterien (1) der erste Batteriepol (6) durch den Batteriezulauf (8) und der zweite Batteriepol (7) durch den Batterieablauf (9) aus dem Batterieinnenraum (15) nach außen geführt sind und dass sowohl der Batteriezulauf (8) als auch der Batterieablauf (9) im Batteriedeckel (12) angeordnet sind,
**dass** der Batterieverbund (35) einen Verbundkopf (37) aufweist und der Verbundkopf (37) auf den Batteriedeckeln (12) angeordnet ist,
**dass** der Verbundkopf (37) einen Verbundzulaufkanal (38) mit einem Verbundzulaufanschluss (39) und einen Verbundablaufkanal (40) mit einem Verbundablaufanschluss (41) aufweist,
**dass** einerseits jeder der Batteriezuläufe (8) und der Verbundzulaufkanal (38) und andererseits jeder der Batterieabläufe (9) und der Verbundablaufkanal (40) unmittelbar und dicht für ein Temperiermedium miteinander verbunden sind,
**dass** der Batterieverbund (35) abgesehen vom Verbundzulaufanschluss (39) und vom Verbundablaufanschluss (41) dicht für ein Temperiermedium ist und
**dass** einerseits die Systemzulaufleitung (72) und der mindestens eine Verbundzulaufkanal (38) über den Verbundzulaufanschluss (39) und andererseits die Systemablaufleitung (74) und der mindestens eine Verbundablaufkanal (40) über den Verbundablaufanschluss (41) miteinander verbunden sind.

2. Batteriesystem (61) nach Anspruch 1, **dadurch gekennzeichnet, dass** das Batteriesystem (61) eine elektrische Systemschaltung (75) zur Überwachung des Batteriesystems (61) und eine elektrische Systemsteuerung (76) zur Steuerung des Batteriesystems (61) aufweist, dass vorzugsweise die Systemschaltung (75) zur Versorgung aus mindestens einer der Batterien (1) ausgebildet ist und dass vorzugsweise die Systemsteuerung (76) zur Versorgung aus einer externen Energiequelle ausgebildet ist.

3. Batteriesystem (61) nach Anspruch 2, **dadurch gekennzeichnet, dass** die Systemschaltung (75) eine Systemschnittstelle (80) aufweist, dass die Systemschaltung (75) und die Systemsteuerung (76) über die Systemschnittstelle (80) zur Kommunikation miteinander ausgebildet sind und dass vorzugsweise die Systemschnittstelle (80) eine galvanische Trennung aufweist.

4. Batteriesystem (61) nach Anspruch 2 oder 3, **dadurch gekennzeichnet, dass** die Systemschaltung (75) auf einer Systemschaltungsplatine (77) realisiert ist und/oder dass die Systemsteuerung (76) auf einer Systemsteuerungsplatine (78) realisiert ist.

5. Batteriesystem (61) nach einem der Ansprüche 2 bis 4, **dadurch gekennzeichnet, dass** die Systemsteuerung (76) einen Systemanschluss (81) aufweist, dass die Systemsteuerung (76) zur Kommunikation über den Systemanschluss (81) ausgebildet ist und dass vorzugsweise der Systemanschluss (81) von außen zugänglich am Systemgehäuse (62) angeordnet ist.

6. Batteriesystem (61) nach einem der Ansprüche 2 bis 5, **dadurch gekennzeichnet, dass** die Systemschaltung (75) eine im Leistungspfad (70) angeordnete Sicherung (82) aufweist, dass vorzugsweise die Sicherung (82) eine Schmelzsicherung ist und dass vorzugsweise die Systemsteuerung (76) zur Detektion eines Zustands der Sicherung (82) ausgebildet ist.

7. Batteriesystem (61) nach einem der Ansprüche 2 bis 6, **dadurch gekennzeichnet, dass** die Systemschaltung (75) ein erstes im Leistungspfad (70) und in der ersten Leistungsleitung (66) angeordnetes Schütz (83) zur Unterbrechung des Leistungspfads (70) aufweist und dass vorzugsweise die Systemsteuerung (76) zur Steuerung des ersten Schützes (83) ausgebildet ist.

8. Batteriesystem (61) nach einem der Ansprüche 2 bis 7, **dadurch gekennzeichnet, dass** die Systemschaltung (75) ein zweites im Leistungspfad (70) und in der zweiten Leistungsleitung (68) angeordnetes Schütz (84) zur Unterbrechung des Leistungspfads (70) aufweist und dass vorzugsweise die Systemsteuerung (76) zur Steuerung des zweiten Schützes (84) ausgebildet ist.

9. Batteriesystem (61) nach einem der Ansprüche 2 bis 8, **dadurch gekennzeichnet, dass** die Systemschaltung (75) einen im Leistungspfad (70) angeordneten Shunt (85) zur Messung eines Stroms im Leistungspfad (70) aufweist und dass vorzugsweise die Systemsteuerung (76) zur Messung eines Stroms durch den Shunt (85) ausgebildet ist.

10. Batteriesystem (61) nach den Ansprüchen 7 und 8 und nach Anspruch 2 oder 9, **dadurch gekennzeichnet, dass** die Systemsteuerung (76) zur Bestimmung einer Spannung zwischen der ersten Leistungsleitung (66) und der zweiten Leistungsleitung (68) und zur Ansteuerung des ersten Schützes (83) und/oder des zweiten Schützes (84) in Abhängigkeit von der Spannung ausgebildet ist.

11. Batteriesystem (61) nach einem der Ansprüche 2 bis 10, **dadurch gekennzeichnet, dass** der mindestens eine Batterieverbund (35) eine elektrische Verbundschaltung (54) mit einer elektrischen Verbundschnittstelle (55) aufweist, dass die Verbundschaltung (54) zur Überwachung des Batterieverbunds (35) und zur Kommunikation über die Verbundschnittstelle (55) ausgebildet ist und dass der Batterieverbund (35) und die Systemsteuerung (76) über die Verbundschnittstelle (55) miteinander verbunden und zur Kommunikation miteinander ausgebildet sind.

12. Batteriesystem (61) nach einem der Ansprüche 1 bis 11, **dadurch gekennzeichnet, dass** das Batteriesystem (61) mindestens zwei Batterieverbünde (35) und die Leistungsverschaltung (63) mindestens einen Leistungsleiter (69) aufweist, dass die mindestens zwei Batterieverbünde (35) durch den mindestens einen Leistungsleiter (69) elektrisch entweder in Reihe oder parallel geschaltet sind und dass einerseits die Systemzulaufleitung (72) und jeder der Verbundzulaufkanäle (38) über den Verbundzulaufanschluss (39) und andererseits die Systemablaufleitung (74) und jeder der Verbundablaufkanäle (40) über den Verbundablaufanschluss (41) miteinander verbunden sind.

13. Batteriesystem (61) nach den Ansprüchen 12 und 13, **dadurch gekennzeichnet, dass** die mindestens zwei Batterieverbünde (35) über die Verbundschnittstelle (55) von einem der Batterieverbünde (35) miteinander verbunden und zur Kommunikation miteinander ausgebildet sind.

14. Batteriesystem (61) nach einem der Ansprüche 1 bis 13, **dadurch gekennzeichnet, dass** das Systemgehäuse (62) einen Systembereich (86) und einen Batteriebereich (87) aufweist, dass der Systembereich (86) und der Batteriebereich (87) voneinander räumlich separiert sind, dass die Systemschaltung (75) und die Systemsteuerung (76) im Systembereich (86) und der mindestens eine Batterieverbund (35) im Batteriebereich (87) angeordnet sind und dass vorzugsweise im Systembereich (86) mindestens ein Ventilator zur Umwälzung der Luft im Systembereich (86) und/oder im Batteriebereich (87) angeordnet ist.

15. Batteriesystem (61) nach einem der Ansprüche 1 bis 14, **dadurch gekennzeichnet, dass** zwischen dem mindestens einen Batterieboden (10) und dem Systemgehäuse (62) eine temperaturisolierende und/oder oder feuerfeste Einlage (88) angeordnet ist und dass vorzugsweise die Einlage (88) Glaswolle oder Silikatwolle aufweist.

16. Batteriesystem (61) nach Anspruch 15, **dadurch gekennzeichnet, dass** das Systemgehäuse (62) mit der Einlage (88) zumindest teilweise ausgekleidet ist.

17. Batteriesystem (61) nach Anspruch 15 oder 16, **dadurch gekennzeichnet, dass** die Einlage (88) Glaswolle aufweist und dass im Systemgehäuse (62) mindestens eine Gasöffnung ausgebildet ist, sodass ein aus mindestens einer der Batterien (1) austretendes Gas zunächst durch die Glaswolle und dann durch die Gasöffnung aus dem Systemgehäuse (62) strömt.

## Claims

1. Battery system (61) with a system housing (62), a power circuit (63), a temperature control medium supply (64), and at least one battery assembly (35),
wherein the at least one battery assembly (35) comprises at least two batteries (1) and at least one electrical assembly conductor (36) and is arranged in the system housing (62),
wherein each of the batteries (1) comprises a battery housing (3), a first electrical battery terminal (6), a second electrical battery terminal (7), a battery inlet (8) and a battery outlet (9) for a temperature control medium, and at least one cell (2),
wherein each of the battery housings (3) comprises a battery base (10), a battery support (11), and a battery cover (12), and the battery base (10), the battery support (11) and the battery cover (12) enclose a battery interior (15) in a manner that is sealed for a temperature control medium, apart from the battery inlet (8) and the battery outlet (9),
wherein the at least one cell (2) of each of the batteries (1) is arranged in the battery interior (15) of the battery (1) for flushing with a temperature control medium,
wherein the at least two batteries (1) are electrically connected to each other by the at least one assembly conductor (36),
wherein the power connection (63) has a first power connection (65), a first power line (66) electrically connected to the first power connection (65), a second power connection (67), a second power line (68) electrically connected to the second power connection (67), and a power path (70),
wherein the first power line (66) and the second power line (68) are electrically connected to the at least one battery assembly (35),
wherein the power path (70) extends between the first power terminal (65) and the second power terminal (67), and the first power line (66), the at least one battery assembly (35), and the second power line (68) are located in the power path (70),
wherein the first power terminal (65) and the second power terminal (67) are arranged on the system housing (62) so as to be accessible from the outside, wherein the temperature control medium supply (64) has a system inlet terminal (71), a system inlet line (72) connected to the system inlet terminal (71), a system outlet connection (73) and a system outlet line (74) connected to the system outlet connection (73),
wherein the system inlet connection (71) and the system outlet connection (73) are arranged on the system housing (62) so as to be accessible from the outside, and
wherein the system inlet line (72) and the system outlet line (74) are connected to the at least one battery assembly (35) for flow-through with a temperature control medium,
**characterized in**
**that** in each of the batteries (1), the first battery terminal (6) is led in to the battery inlet (8) and the second battery terminal (7) are led out of the battery interior (15) through the battery outlet (9), and that both the battery inlet (8) and the battery outlet (9) are arranged in the battery cover (12),
**that** the battery assembly (35) has an assembly head (37) and the assembly head (37) is arranged on the battery covers (12),
**that** the assembly head (37) has a assembly inlet channel (38) with a assembly inlet connection (39) and a assembly outlet channel (40) with a assembly outlet connection (41),
**that**, on the one hand, each of the battery inlets (8) and the assembly inlet channel (38) and, on the other hand, each of the battery outlets (9) and the assembly outlet channel (40) are connected directly and tightly to each other for a temperature control medium,
**that** the battery assembly (35) is tight for a temperature control medium apart from the assembly inlet connection (39) and the assembly outlet connection (41), and
**that**, on the one hand, the system inlet line (72) and the at least one assembly inlet channel (38) are connected to each other via the assembly inlet connection (39) and, on the other hand, the system outlet line (74) and the at least one assembly outlet channel (40) are connected to each other via the assembly outlet connection (41).

2. Battery system (61) according to claim 1, **characterized in that** the battery system (61) has an electrical system circuit (75) for monitoring the battery system (61) and an electrical system control (76) for controlling the battery system (61), that the system circuit (75) is preferably designed to be supplied by at least one of the batteries (1), and that the system controller (76) is preferably designed to be supplied by an external energy source.

3. Battery system (61) according to claim 2, **characterized in that** the system circuit (75) has a system interface (80), that the system circuit (75) and the system controller (76) are designed to communicate with each other via the system interface (80), and that the system interface (80) preferably has galvanic isolation.

4. Battery system (61) according to claim 2 or 3, **characterized in that** the system circuit (75) is implemented on a system circuit board (77) and/or that the system controller (76) is implemented on a system controller board (78).

5. Battery system (61) according to any one of claims 2 to 4, **characterized in that** the system controller (76) has a system connection (81), that the system controller (76) is designed for communication via the system connection (81), and that, preferably, the system connection (81) is arranged on the system housing (62) so as to be accessible from the outside.

6. Battery system (61) according to any one of claims 2 to 5, **characterized in that** the system circuit (75) has a fuse (82) arranged in the power path (70), that the fuse (82) is preferably a melting fuse, and that the system control (76) is preferably designed to detect a state of the fuse (82).

7. Battery system (61) according to any one of claims 2 to 6, **characterized in that** the system circuit (75) has a first contactor (83) arranged in the power path (70) and in the first power line (66) for interrupting the power path (70), and that the system control (76) is preferably designed to control the first contactor (83).

8. Battery system (61) according to any one of claims 2 to 7, **characterized in that** the system circuit (75) has a second contactor (84) arranged in the power path (70) and in the second power line (68) for interrupting the power path (70), and that the system control (76) is preferably designed to control the second contactor (84).

9. Battery system (61) according to any one of claims 2 to 8, **characterized in that** the system circuit (75) has a shunt (85) arranged in the power path (70) for measuring a current in the power path (70), and that the system control (76) is preferably designed to measure a current through the shunt (85).

10. Battery system (61) according to claims 7 and 8 and according to claim 2 or 9, **characterized in that** the system controller (76) is designed to determine a voltage between the first power line (66) and the second power line (68) and to control the first contactor (83) and/or the second contactor (84) depending on the voltage.

11. Battery system (61) according to any one of claims 2 to 10, **characterized in that** the at least one battery array (35) has an electrical array circuit (54) with an electrical array interface (55), that the array circuit (54) is designed to monitor the battery array (35) and for communication via the array interface (55), and that the battery array (35) and the system controller (76) are connected to each other via the array interface (55) and are designed to communicate with each other.

12. Battery system (61) according to one of claims 1 to 11, **characterized in that** the battery system (61) has at least two battery assemblies (35) and the power circuit (63) has at least one power conductor (69), that the at least two battery assemblies (35) are electrically connected either in series or in parallel by the at least one power conductor (69) and that, on the one hand, the system inlet line (72) and each of the assembly inlet channels (38) are connected to each other via the assembly inlet connection (39) and, on the other hand, the system outlet line (74) and each of the assembly outlet channels (40) are connected to each other via the assembly outlet connection (41).

13. Battery system (61) according to claims 12 and 13, **characterized in that** the at least two battery assemblies (35) are connected to each other via the assembly interface (55) of one of the battery assemblies (35) and are designed to communicate with each other.

14. Battery system (61) according to one of claims 1 to 13, **characterized in that** the system housing (62) has a system area (86) and a battery area (87), that the system area (86) and the battery area (87) are spatially separated from each other, that the system circuit (75) and the system control (76) are located in the system area (86) and the at least one battery assembly (35) is arranged in the battery area (87), and that at least one fan for circulating the air in the system area (86) and/or in the battery area (87) is preferably arranged in the system area (86).

15. Battery system (61) according to any one of claims 1 to 14, **characterized in that** a temperature-insulating and/or fireproof insert (88) is arranged between the at least one battery base (10) and the system housing (62) and that, preferably, the insert (88) comprises glass wool or silicate wool.

16. Battery system (61) according to claim 15, **characterized in that** the system housing (62) is at least partially lined with the insert (88).

17. Battery system (61) according to claim 15 or 16, **characterized in that** the insert (88) comprises glass wool and that at least one gas opening is formed in the system housing (62) so that gas escaping from at least one of the batteries (1) first flows through the glass wool and then through the gas opening out of the system housing (62).

## Revendications

1. Système de batterie (61) comprenant un boîtier de système (62), un circuit de puissance (63), une alimentation en fluide de régulation de température (64) et au moins un groupe de batteries (35),
l'au moins un groupe de batteries (35) présentant au moins deux batteries (1) et au moins un conducteur électrique de liaison (36) et étant agencé dans le boîtier de système (62),
chacune des batteries (1) présentant un boîtier de batterie (3), un premier pôle électrique de batterie (6), un deuxième pôle électrique de batterie (7), une entrée de batterie (8) et une sortie de batterie (9) pour un fluide de régulation de température et au moins une cellule (2),
chacun des boîtiers de batterie (3) présentant un fond de batterie (10), un support de batterie (11) et un couvercle de batterie (12), et le fond de batterie (10), le support de batterie (11) et le couvercle de batterie (12) entourant de manière étanche pour un fluide de régulation de température un espace intérieur de batterie (15), à l'exception de l'entrée de batterie (8) et de la sortie de batterie (9),
l'au moins une cellule (2) de chacune des batteries (1) étant agencée dans l'espace intérieur de batterie (15) de la batterie (1) afin d'être baignée par un fluide de régulation de température,
les au moins deux batteries (1) étant reliées électriquement entre elles par l'au moins un conducteur de liaison (36),
le circuit de puissance (63) présentant une premier raccord de puissance (65), une première ligne de puissance (66) reliée électriquement au premier raccord de puissance (65), un deuxième raccord de puissance (67), une deuxième ligne de puissance (68) reliée électriquement au deuxième raccord de puissance (67) et un chemin de puissance (70),
la première ligne de puissance (66) et la deuxième ligne de puissance (68) étant reliées électriquement à l'au moins un groupe de batteries (35),
le chemin de puissance (70) s'étendant entre le premier raccord de puissance (65) et le deuxième raccord de puissance (67), et la première ligne de puissance (66), l'au moins un groupe de batteries (35) et la deuxième ligne de puissance (68) étant situés dans le chemin de puissance (70),
le premier raccord électrique (65) et le deuxième raccord électrique (67) étant agencés de manière accessible depuis l'extérieur sur le boîtier de système (62), l'alimentation en fluide de régulation de température (64) présentant un raccord d'entrée de système (71), une conduite d'entrée de système (72) reliée au raccord d'entrée de système (71), un raccord de sortie de système (73) et une conduite de sortie de système (74) reliée au raccord de sortie de système (73),
le raccord d'entrée de système (71) et le raccord de sortie de système (73) étant agencés de manière accessible depuis l'extérieur sur le boîtier de système (62) et
la ligne d'entrée système (72) et la ligne de sortie de système (74) étant reliées à l'au moins un groupe de batteries (35) pour la traversée par un fluide de régulation de température,
**caractérisé**
**en ce que**, pour chacune des batteries (1), le premier pôle de batterie (6) est guidé vers l'extérieur depuis l'espace intérieur de batterie (15) à travers l'entrée de batterie (8) et le deuxième pôle de batterie (7) à travers la sortie de batterie (9), et en ce que l'entrée de batterie (8) et la sortie de batterie (9) sont toutes deux agencées dans le couvercle de batterie (12),
**en ce que** le groupe de batterie (35) présente une tête de groupe (37) et la tête de groupe (37) est agencée sur les couvercles de batterie (12),
**en ce que** la tête de groupe (37) présente un canal d'entrée de groupe (38) avec un raccord d'entrée de groupe (39) et un canal de sortie de groupe (40) avec un raccord de sortie de groupe (41),
**en ce que**, d'une part, chacune des entrées de batterie (8) et le canal d'entrée de groupe (38) et, d'autre part, chacune des sorties de batterie (9) et le canal de sortie de groupe (40) sont reliés entre eux de manière directe et étanche pour un fluide de régulation de température, en ce que le groupe de batteries (35), à l'exception du raccord d'entrée de groupe (39) et du raccord de sortie de groupe (41), est étanche pour un fluide de régulation de température et
**en ce que**, d'une part, la ligne d'entrée de système (72) et l'au moins un canal d'entrée de groupe (38) sont reliés entre eux par le raccord d'entrée de groupe (39) et, d'autre part, la ligne de sortie de système (74) et l'au moins un canal de sortie de groupe (40) sont reliés entre eux par le raccord de sortie de groupe (41).

2. Système de batterie (61) selon la revendication 1, **caractérisé en ce que** le système de batterie (61) présente un circuit électrique de système (75) pour surveiller le système de batterie (61) et une commande électrique de système (76) pour commander le système de batterie (61), **en ce que** le circuit de système (75) est de préférence réalisé pour être alimenté à partir d'au moins une des batteries (1) et **en ce que** la commande de système (76) est de préférence réalisée pour être alimentée à partir d'une source d'énergie externe.

3. Système de batterie (61) selon la revendication 2, **caractérisé en ce que** le circuit de système (75) présente une interface de système (80), **en ce que** le circuit de système (75) et la commande de système (76) sont réalisés pour communiquer entre eux via l'interface de système (80) et **en ce que** l'interface de système (80) présente de préférence une séparation galvanique.

4. Système de batterie (61) selon la revendication 2 ou 3, **caractérisé en ce que** le circuit de système (75) est réalisé sur une carte de circuit de système (77) et/ou **en ce que** la commande de système (76) est réalisée sur une carte de commande de système (78).

5. Système de batterie (61) selon l'une quelconque des revendications 2 à 4, **caractérisé en ce que** la commande de système (76) présente un raccord de système (81), **en ce que** la commande de système (76) est réalisée pour communiquer via le raccord de système (81) et **en ce que** le raccord de système (81) est de préférence agencé de manière accessible de l'extérieur sur le boîtier de système (62).

6. Système de batterie (61) selon l'une quelconque des revendications 2 à 5, **caractérisé en ce que** le circuit de système (75) présente un fusible (82) agencé dans le chemin de puissance (70), **en ce que** le fusible (82) est de préférence un fusible à fusion et **en ce que** la commande de système (76) est de préférence réalisée pour détecter un état du fusible (82).

7. Système de batterie (61) selon l'une quelconque des revendications 2 à 6, **caractérisé en ce que** le circuit de système (75) présente un premier contacteur (83) agencé dans le chemin de puissance (70) et dans la première ligne de puissance (66) pour interrompre le chemin de puissance (70) et **en ce que** la commande de système (76) est de préférence réalisée pour commander le premier contacteur (83).

8. Système de batterie (61) selon l'une quelconque des revendications 2 à 7, **caractérisé en ce que** le circuit de système (75) présente un deuxième contacteur (84) agencé dans le chemin de puissance (70) et dans la deuxième ligne de puissance (68) pour interrompre le chemin de puissance (70) et **en ce que** la commande de système (76) est de préférence réalisée pour commander le deuxième contacteur (84).

9. Système de batterie (61) selon l'une quelconque des revendications 2 à 8, **caractérisé en ce que** le circuit de système (75) présente un shunt (85) agencé dans le chemin de puissance (70) pour mesurer un courant dans le chemin de puissance (70) et **en ce que** la commande système (76) est de préférence réalisée pour mesurer un courant à travers le shunt (85).

10. Système de batterie (61) selon les revendications 7 et 8 et selon la revendication 2 ou 9, **caractérisé en ce que** la commande de système (76) est réalisée pour déterminer une tension entre la première ligne de puissance (66) et la deuxième ligne de puissance (68) et pour commander le premier contacteur (83) et/ou le deuxième contacteur (84) en fonction de la tension.

11. Système de batterie (61) selon l'une quelconque des revendications 2 à 10, **caractérisé en ce que** l'au moins un groupe de batteries (35) présente un circuit électrique de groupe (54) avec une interface électrique de groupe (55), **en ce que** le circuit de groupe (54) est réalisé pour surveiller le groupe de batteries (35) et pour communiquer via l'interface de groupe (55), et **en ce que** le groupe de batteries (35) et la commande de système (76) sont reliés entre eux et réalisés pour communiquer entre eux via l'interface de groupe (55).

12. Système de batterie (61) selon l'une quelconque des revendications 1 à 11, **caractérisé en ce que** le système de batterie (61) présente au moins deux groupes de batteries (35) et le circuit de puissance (63) présente au moins un conducteur de puissance (69), **en ce que** les au moins deux groupes de batteries (35) sont connectés électriquement soit en série, soit en parallèle par l'au moins un conducteur de puissance (69), et **en ce que**, d'une part, la ligne d'entrée de système (72) et chacun des canaux d'entrée de groupe (38) sont reliés entre eux via le raccord d'entrée de groupe (39) et, d'autre part, la ligne de sortie de système (74) et chacun des canaux de sortie de groupe (40) sont reliés entre eux via le raccord de sortie de groupe (41).

13. Système de batterie (61) selon les revendications 12 et 13, **caractérisé en ce que** les au moins deux groupes de batteries (35) sont reliés entre eux et réalisés pour communiquer entre eux via l'interface de groupe (55) de l'un des groupes de batteries (35).

14. Système de batterie (61) selon l'une quelconque des revendications 1 à 13, **caractérisé en ce que** le boîtier de système (62) présente une zone de système (86) et une zone de batterie (87), **en ce que** la zone de système (86) et la zone de batterie (87) sont séparées spatialement l'une de l'autre, **en ce que** le circuit de système (75) et la commande de système (76) sont agencés dans la zone de système (86) et l'au moins un groupe de batteries (35) est agencé dans la zone de batterie (87) et **en ce qu'**au moins un ventilateur est agencé de préférence dans la zone de système (86) pour faire circuler l'air dans la zone de système (86) et/ou dans la zone de batterie (87).

15. Système de batterie (61) selon l'une quelconque des revendications 1 à 14, **caractérisé en ce qu'**un insert (88) isolant thermiquement et/ou ignifuge est agencé entre l'au moins un fond de batterie (10) et le boîtier de système (62) et **en ce que** l'insert (88) présente de préférence de la laine de verre ou de la laine de silicate.

16. Système de batterie (61) selon la revendication 15, **caractérisé en ce que** le boîtier de système (62) est au moins partiellement revêtu de l'insert (88).

17. Système de batterie (61) selon la revendication 15 ou 16, **caractérisé en ce que** l'insert (88) présente de la laine de verre et **en ce qu'**au moins une ouverture pour gaz est réalisée dans le boîtier de système (62), de telle sorte qu'un gaz s'échappant d'au moins une des batteries (1) s'écoule d'abord à travers la laine de verre, puis à travers l'ouverture pour gaz hors du boîtier de système (62).
